(19) Europäisches Patentamt
European Patent Office
Office européen des brevets

(11) **EP 4 706 855 A1**

(12) **EUROPEAN PATENT APPLICATION**

(43) Date of publication:
**11.03.2026 Bulletin 2026/11**

(21) Application number: **25197017.4**

(22) Date of filing: **20.08.2025**

(51) International Patent Classification (IPC):
**B23C 3/12** *(2006.01)*     **B23B 51/10** *(2006.01)*
**B23C 5/10** *(2006.01)*     G05B 19/18 *(2006.01)*
**B24B 9/00** *(2006.01)*

(52) Cooperative Patent Classification (CPC):
**B23C 3/122; B23B 51/105; B23C 5/10;**
B23C 3/124; B23C 2220/16; B23C 2220/20;
B23C 2220/48; B23C 2270/18; B23C 2270/20;
G05B 19/182

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.09.2024 JP 2024154850**

(71) Applicant: **Star Micronics Co., Ltd.
Shizuoka-shi, Shizuoka 422-8654 (JP)**

(72) Inventors:
• **Kamo, Shotaro**
  **Shizuoka-shi, Shizuoka 422-8654 (JP)**
• **Yasuike, Makoto**
  **Shizuoka-shi, Shizuoka 422-8654 (JP)**

(74) Representative: **Grünecker Patent- und
Rechtsanwälte
PartG mbB
Leopoldstraße 4
80802 München (DE)**

(54) **MACHINE TOOL**

(57)     To provide a machine tool that improves convenience when removing burrs.

A deburring tool that cuts a periphery of a hole in an orientation intersecting a spindle axis in a workpiece is attached to a tool post of a machine tool and the tool post rotates the deburring tool around a deburring tool center axis. A control unit of the machine tool acquires a command (CM1 to CM4) for instructing the deburring tool to either perform, on the periphery, down-cutting in which a cutting direction by the rotating deburring tool is opposite to a relative movement direction of the deburring tool or to perform, on the periphery, up-cutting in which the cutting direction and the relative movement direction are the same, and performs control to cut the periphery so as to maintain the cut instructed by the command (CM1 to CM4) at a cutting position.

FIG. 8A

DOWN-CUTTING OF OUTER PERIPHERAL SURFACE
or UP-CUTTING OF INNER PERIPHERAL SURFACE

R1 → P0 → R2 ---→ R1 → P2 → R2

EP 4 706 855 A1

FIG. 8B

UP-CUTTING OF OUTER PERIPHERAL SURFACE or
DOWN-CUTTING OF INNER PERIPHERAL SURFACE

R1 → P0 → R2 ---→ R1 → P2 → R2

## Description

### CROSS-REFERENCES

The application claims priority of Japanese Patent Application No. 2024-154850 filed on September 9, 2024. The contents of this application are incorporated herein by reference in their entirety.

### BACKGROUND OF THE INVENTION

#### 1. Field of the Invention

The present invention relates to a machine tool capable of cutting a periphery of a hole in an orientation perpendicular to a spindle axis in a workpiece.

#### 2. Description of the Related Art

As a machine tool, an NC (numerical control) lathe that machines a cylindrical workpiece gripped by a spindle with a tool is known. When a cross hole is formed in the workpiece with a rotary tool in an orientation along a machining center axis perpendicular to the spindle axis, burrs are produced around a periphery of the cross hole. Therefore, burrs are removed with a specialized tool attached to a tool post. The NC lathe is capable of executing processing of removing burrs in the periphery of the cross hole by controlling, according to a machining program created by an operator, relative cutting positions of the workpiece by the specialized tool in the three directions of an X-axis, a Y-axis, and a Z-axis.
A machine tool disclosed in WO 2014/178355 performs chamfering of an opening edge of a cross hole by moving a conical tool with a conical cutting edge in the three directions.

### SUMMARY OF THE INVENTION

Conceivable cutting methods for removing burrs include down-cutting, in which a cutting direction by a rotating deburring tool is opposite to a movement direction of the deburring tool, and up-cutting (also called uppercutting), in which the cutting direction by the rotating deburring tool is the same as the movement direction of the deburring tool. However, it is not easy for an operator to create machining programs with down-cutting or up-cutting in mind.
Note that problems such as that described above exist not only in lathes but also in various machine tools such as machining centers.

The present invention discloses a machine tool that improves convenience when removing burrs.

A machine tool according to the present invention has an aspect that includes:

a spindle which rotates together with a workpiece around a spindle axis;

a tool post to which is attached a deburring tool that cuts a periphery of a hole in an orientation intersecting the spindle axis in the workpiece and which rotates the deburring tool around a deburring tool center axis; and

a control unit which controls a relative positional relationship between the spindle and the tool post and which performs control to change a cutting position by the deburring tool along the periphery, wherein

the control unit

acquires a command for instructing the rotating deburring tool to either perform, on the periphery, down-cutting in which a cutting direction by the deburring tool is opposite to a relative movement direction of the deburring tool or to perform, on the periphery, up-cutting in which the cutting direction and the relative movement direction are the same, and

performs, at the cutting position, control to cut the periphery so that the cut instructed by the command is maintained.

According to the present invention, a machine tool that improves convenience when removing burrs can be provided.

### BRIEF DESCRIPTION OF THE DRAWINGS

FIG. 1 is a front view schematically showing a configuration example of a machine tool;
FIG. 2 is a block diagram schematically showing a configuration example of an electric circuit of a machine tool;
FIG. 3A is a plan view schematically showing an example of a cylindrical workpiece having a cross hole, FIG. 3B is a longitudinal sectional view at a position indicated by A1-A1 in FIG. 3A, and FIG. 3C is a transverse sectional view at a position indicated by A2-A2 in FIG. 3A;
FIG. 4A is a plan view schematically showing an example of a cutting position that changes along a periphery of a cross hole, and FIGS. 4B and 4C are sectional views schematically showing an example in which a deburring tool in an orientation along a spindle axis is arranged on an outer peripheral surface of a cylindrical workpiece;
FIGS. 5A and 5B are sectional views schematically showing an example in which a deburring tool in an orientation along a spindle axis is arranged on an inner peripheral surface of a cylindrical workpiece;
FIG. 6 is a diagram schematically showing an example of determining a Z-axis coordinate $Zp$ and a C-axis angle $Cp$ corresponding to a cutting position based on a diameter value (CD) of a cross hole and an outer peripheral surface value (OD) of a workpiece;

FIG. 7 is a diagram schematically showing an example of determining the Z-axis coordinate Zp and the C-axis angle Cp corresponding to a cutting position based on a diameter value (CD) of a cross hole and an inner diameter value (OD) of a workpiece;

FIG. 8A is a diagram schematically showing an example of a movement of a cutting position when performing down-cutting of an outer peripheral surface or up-cutting of an inner peripheral surface, and FIG. 8B is a diagram schematically showing an example of a movement of a cutting position when performing up-cutting of an outer peripheral surface or down-cutting of an inner peripheral surface;

FIG. 9 is a flow chart schematically showing an example of deburring processing;

FIG. 10 is a flow chart schematically showing an example of deburring processing;

FIG. 11 is a diagram schematically showing an example of a Z-axis movement and a C-axis rotation of a workpiece during deburring;

FIG. 12 is a diagram schematically showing an example of a Z-axis movement and a C-axis rotation of a workpiece during deburring;

FIG. 13A is a diagram schematically showing an example of changing an orientation of rotation of a deburring tool when performing down-cutting of an outer peripheral surface or up-cutting of an inner peripheral surface, and FIG. 13B is a diagram schematically showing an example of changing an orientation of rotation of a deburring tool when performing up-cutting of an outer peripheral surface or down-cutting of an inner peripheral surface;

FIG. 14 is a flow chart schematically showing an example of deburring processing that switches a spin direction of the deburring tool;

FIG. 15 is a diagram schematically showing an example of a tool post to which a right-handed rotary tool and a left-handed rotary tool have been attached as deburring tools;

FIG. 16A is a diagram schematically showing an example of switching deburring tools when performing down-cutting of an outer peripheral surface or up-cutting of an inner peripheral surface, and FIG. 16B is a diagram schematically showing an example of switching deburring tools when performing up-cutting of an outer peripheral surface or down-cutting of an inner peripheral surface;

FIG. 17 is a flow chart schematically showing an example of deburring processing that switches deburring tools to be used;

FIG. 18 is a diagram schematically showing an example of determining the Z-axis coordinate Zp and the C-axis angle Cp corresponding to a cutting position based on a diameter value (CD) of a long hole, an inner diameter value (OD) of a workpiece, and a center-to-center distance value (LC) of arc parts;

FIG. 19 is a flow chart schematically showing an example of deburring processing of a periphery of a long hole; and

FIG. 20 is a diagram schematically showing an example of an interchange between down-cutting and up-cutting midway through cutting of a periphery of a hole.

DETAILED DESCRIPTION

Hereinafter, an embodiment of the present invention will be described. Needless to say, the following embodiment is merely illustrative of the present invention and not all of the features shown in the embodiment may be essential to solutions of the invention.

(1) Overview of aspects included in present invention:

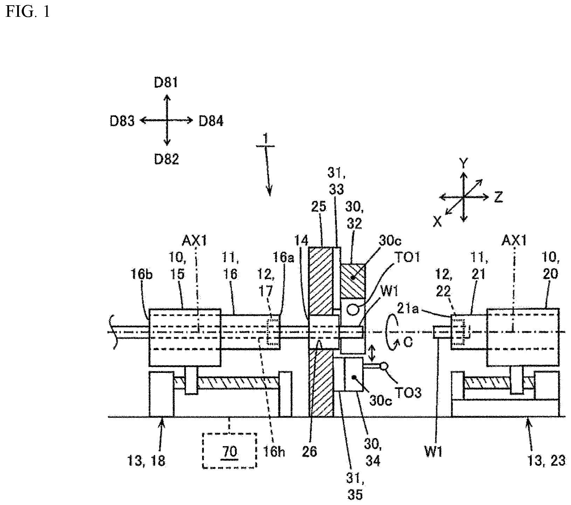

First, an overview of aspects included in the present invention will be described with reference to examples shown in FIGS. 1 to 20. Note that since diagrams in the present application are diagrams schematically showing examples, magnification in each direction shown in the drawings may vary and the drawings may not be consistent with each other. Needless to say, each element of the present aspects is not limited to the specific examples denoted by reference signs.

First Aspect

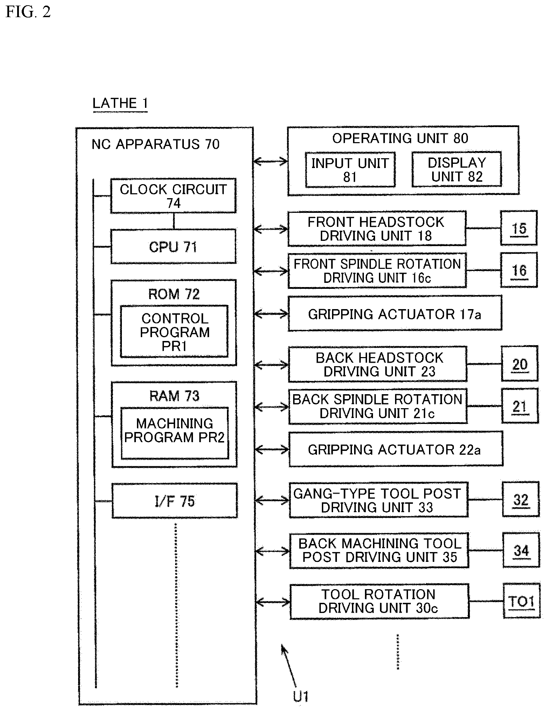

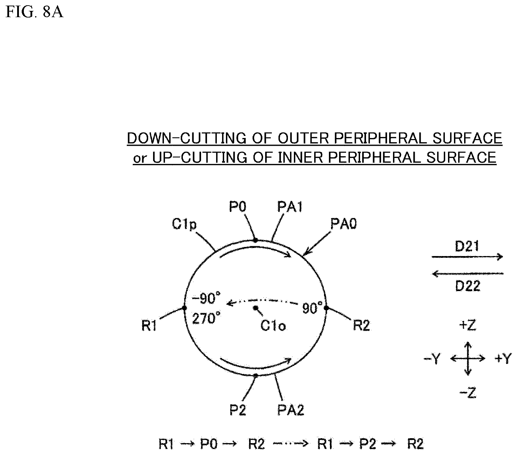

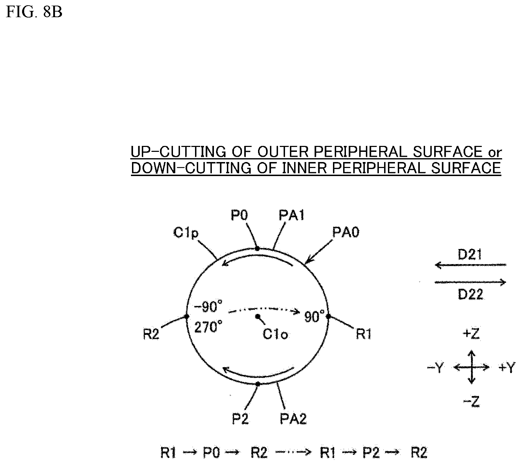

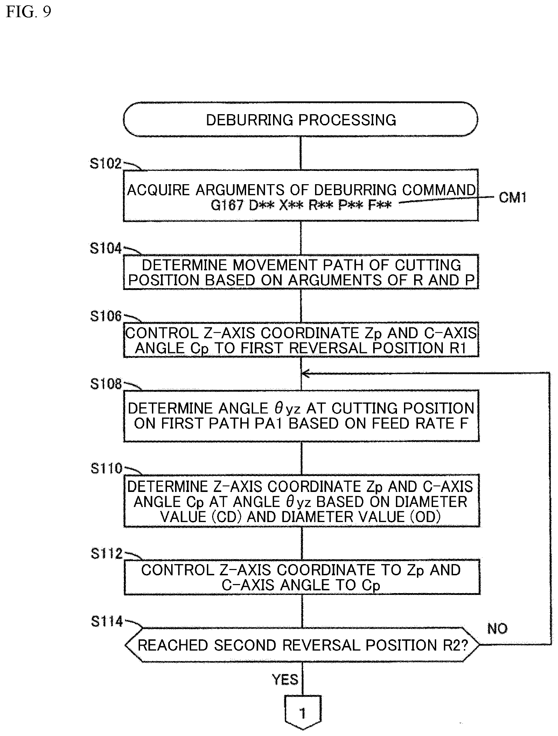

As illustrated in FIGS. 1 and 2, a machine tool (for example, a lathe 1) according to one aspect includes a spindle 11, a tool post 30, and a control unit U1. The spindle 11 rotates together with a workpiece W1 around a spindle axis AX1. A deburring tool TO3 that cuts a periphery C1p of a hole (for example, a cross hole C1) in an orientation intersecting the spindle axis AX1 in the workpiece W1 is attached to the tool post 30 and the tool post 30 rotates the deburring tool TO3 around a deburring tool center axis AX3. The control unit U1 controls a relative positional relationship between the spindle 11 and the tool post 30 and performs control to change a cutting position P1 by the deburring tool TO3 along the periphery C1p. As illustrated in FIGS. 9, 14, 17, and the like, the control unit U1 acquires a command (for example, deburring commands CM1 to CM4) for instructing the deburring tool TO3 to either perform, on the periphery C1p, down-cutting (for example, R = 0) in which a cutting direction D1 by the rotating deburring tool TO3 is opposite to a relative movement direction D2 of the deburring tool TO3 or to perform, on the periphery C1p, up-cutting (for example, R = 1) in which the cutting direction D1 and the relative movement direction D2 are the same. As illustrated in FIGS. 8A and 8B to 19 the control unit U1 performs, at the cutting position P1, control to cut the periphery C1p so that the cut instructed by the command (CM1 to CM4) is maintained.

As described above, whether the cutting of the periphery C1p at the cutting position P1 is to be performed by down-cutting or up-cutting can be instructed by the command (CM1 to CM4). Therefore, the aspect described above can provide a machine tool that improves convenience when removing burrs.

In this case, control of the relative positional relationship between the spindle and the tool post may be control of the position of the spindle when the tool post does not move, control of the position of the tool post when the spindle does not move, or control of positions of both the spindle and the tool post.

The relative movement direction of the deburring tool means a relative movement direction of the deburring tool with reference to a position of a workpiece. When the workpiece does not move, the relative movement direction of the deburring tool means the movement direction of the deburring tool. When the deburring tool does not move, the relative movement direction of the deburring tool means a direction opposite to the movement direction of the workpiece.

Holes in an orientation intersecting the spindle axis include cross holes that connect an outer peripheral surface to an inner peripheral surface in a cylindrical workpiece, horizontal holes that cross the workpiece along the machining center axis, and bottomed holes that are recessed from the outer peripheral surface to the middle of the workpiece along the machining center axis.

The periphery to be cut by the deburring tool may be the outer peripheral surface of a workpiece or the inner peripheral surface of the workpiece. For example, when a cross hole is formed in a cylindrical workpiece, peripheral burrs may occur on both the outer peripheral surface of the workpiece and the inner peripheral surface of the workpiece.

The deburring tool need only be capable of cutting the periphery of a hole in an orientation intersecting the spindle axis in the workpiece and a rotary tool such as an endmill, a grindstone, or a brush can be used.

When the cutting position changes along the periphery of a hole, positions may be created where the rotating deburring tool does not move relative to the cutting direction of the deburring tool. The direction of rotation of the deburring tool at such positions may be either clockwise or counterclockwise.

The additional remarks presented above are also applied to the following aspects.

Second Aspect

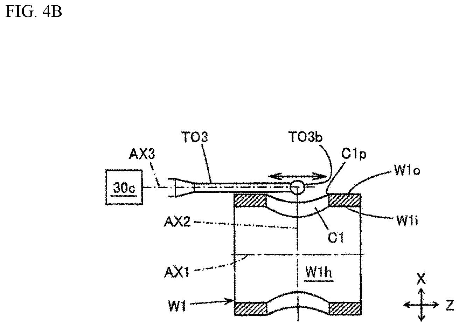

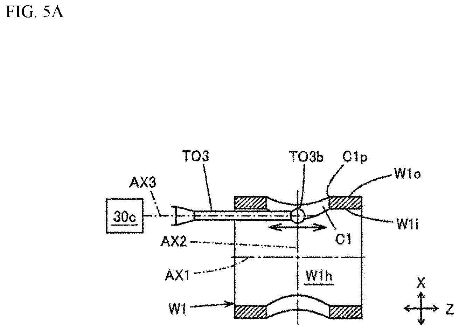

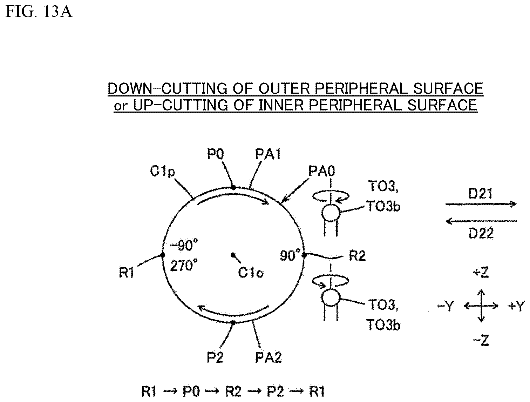

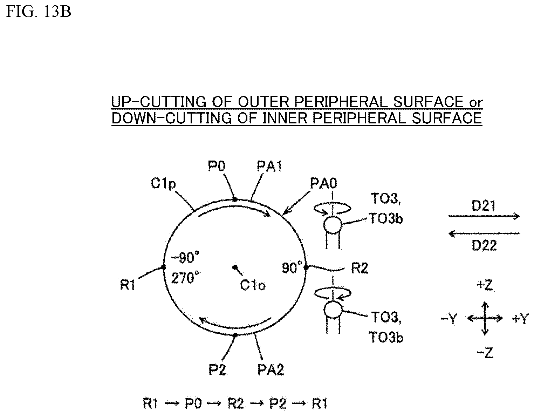

As illustrated in FIGS. 4B and 5A, the deburring tool TO3 may be attached to the tool post 30 in an orientation along the spindle axis AX1. The tool post 30 may rotate the deburring tool TO3 around the deburring tool center axis AX3 along the spindle axis AX1. As illustrated in FIGS. 8A and 8B to 19, the control unit U1 may perform control to change, midway through cutting of the periphery C1p, an orientation to change the cutting position P1 along the periphery C1p (for example, refer to FIGS. 8A and 8B to 12) or an orientation of rotation of the deburring tool TO3 around the deburring tool center axis AX3 (for example, refer to FIGS. 13A and 13B to 17) so as to maintain the cut instructed by the command (CM1 to CM4).

When the orientation of the deburring tool TO3 is along the spindle axis AX1, the relative movement direction D2 of the deburring tool TO3 is to be reversed midway through cutting when the cutting position P1 makes one clockwise turn or one counterclockwise turn along the periphery C1p. Even in this case, down-cutting or up-cutting is maintained due to the orientation to change the cutting position P1 along the periphery C1p or the orientation of rotation of the deburring tool TO3 around the deburring tool center axis AX3 automatically changing midway through cutting of the periphery C1p. Therefore, the aspect described above can easily perform deburring while maintaining down-cutting or up-cutting using a deburring tool in an orientation along the spindle axis.

Third Aspect

As illustrated in FIGS. 8A and 8B to 12 and the like, when the relative movement direction D2 of the deburring tool TO3 with respect to the cutting direction D1 is a first orientation D21, it is assumed that the cut instructed by the command (CM1 to CM4) is to be performed on the periphery C1p. A cutting path PA0 along the periphery C1p may include a first path PA1 and a second path PA2 that reach a second reversal position R2 from a first reversal position R1 without the relative movement direction D2 becoming a second orientation D22 opposite to the first orientation D21. The control unit U1 may perform control for changing the cutting position P1 from the first reversal position R1 to the second reversal position R2 on the first path PA1 and changing the cutting position P1 from the first reversal position R1 to the second reversal position R2 on the second path PA2.

In the case described above, down-cutting or up-cutting is maintained without having to change the orientation of rotation of the deburring tool TO3. Therefore, even if there are constraints on the orientation of rotation of the deburring tool TO3, the aspect described above can perform deburring while maintaining down-cutting or up-cutting without being conscious of the constraints.

In this case, the terms "first", "second", ... in the present application are used to identify each constituent element included in a plurality of constituent elements with similarities and do not imply order. These additional remarks are also applied to the following aspects.

Fourth Aspect

As illustrated in FIGS. 13A and 13B to 14 or the like, the tool post 30 may be capable of rotating the deburring tool TO3 both clockwise and counterclockwise.

The cutting path PA0 along the periphery C1p may include the first path PA1 that reaches the second reversal position R2 from the first reversal position R1 without the relative movement direction D2 of the deburring tool TO3 with respect to the cutting direction D1 becoming the second orientation D22 opposite to the first orientation D21 and the second path PA2 that reaches the first reversal position R1 from the second reversal position R2 without the relative movement direction D2 becoming the first orientation D21. The control unit U1 may control the orientation of rotation of the deburring tool TO3 on the first path PA1 and the second path PA2 in opposite orientations so as to maintain the cut instructed by the command (CM1 to CM4).

When the deburring tool TO3 is usable both clockwise and counterclockwise, the aspect described above maintains down-cutting or up-cutting without having to change an orientation of changing the cutting position P1 along the periphery C1p. Therefore, the aspect described above can efficiently perform deburring while maintaining down-cutting or up-cutting.

Fifth Aspect

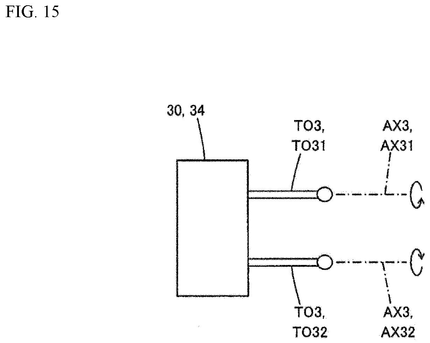

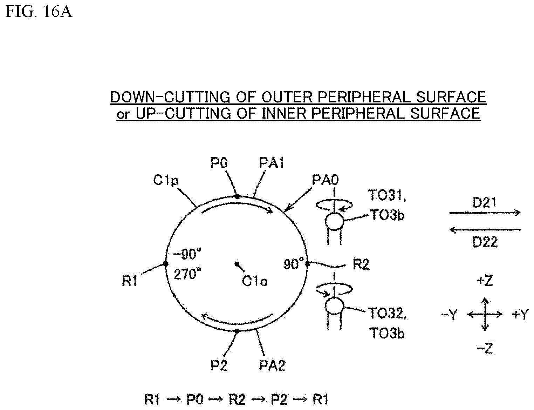

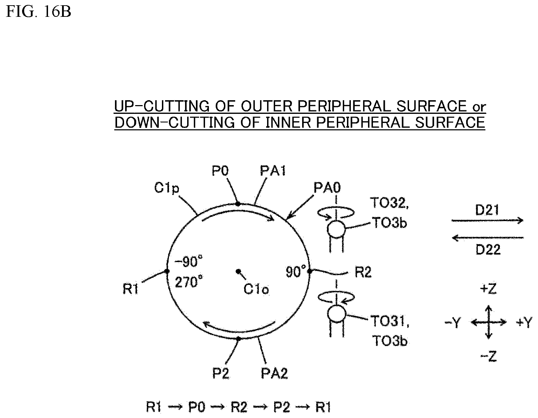

As illustrated in FIG. 15, a right-handed rotary tool TO31 as the deburring tool TO3 and a left-handed rotary tool TO32 as the deburring tool TO3 may be attached to the tool post 30. The tool post 30 may rotate the right-handed rotary tool TO31 clockwise around a right-handed rotary tool center axis AX31 as the deburring tool center axis AX3 and rotate the left-handed rotary tool TO32 counterclockwise around a left-handed rotary tool center axis AX32 as the deburring tool center axis AX3. As illustrated in FIGS. 16A and 16B to 17, the cutting path PA0 along the periphery C1p may include the first path PA1 that reaches the second reversal position R2 from the first reversal position R1 without the relative movement direction D2 of the deburring tool TO3 with respect to the cutting direction D1 becoming the second orientation D22 opposite to the first orientation D21 and the second path PA2 that reaches the first reversal position R1 from the second reversal position R2 without the relative movement direction D2 becoming the first orientation D21. The control unit U1 may perform control for cutting the periphery C1p on the first path PA1 with one rotary tool of the right-handed rotary tool TO31 and the left-handed rotary tool TO32 and cutting the periphery C1p on the second path PA2 with the other rotary tool so as to maintain the cut instructed by the command (CM1 to CM4).

When both the right-handed rotary tool TO31 and the left-handed rotary tool TO32 are usable as the deburring tool TO3, the aspect described above maintains down-cutting or up-cutting without having to change an orientation of changing the cutting position P1 along the periphery C1p. Therefore, the aspect described above can also perform deburring while maintaining down-cutting or up-cutting.

Sixth Aspect

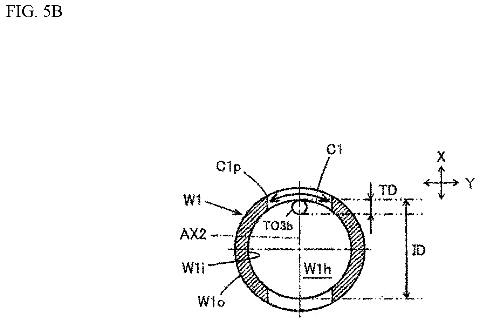

As illustrated in FIGS. 5A, 5B, and the like, the workpiece W1 may have a cylindrical shape. As illustrated in FIGS. 9, 14, 17, and the like, the command (CM1 to CM4) may include an argument (for example, an argument of P) that instructs whether to cut the periphery C1p on an inner peripheral surface W1i of the workpiece W1 or to cut the periphery C1p on an outer peripheral surface W1o of the workpiece W1.

As illustrated in FIGS. 8A and 8B to 19, the control unit U1 may perform control to cut the periphery C1p based on the argument so that the cut instructed by the command (CM1 to CM4) is maintained.

When the orientation of the deburring tool TO3 is along the spindle axis AX1, whether down-cutting or up-cutting is to be performed depends on whether the cutting surface is the inner peripheral surface W1i of the workpiece W1 or the outer peripheral surface W1o of the workpiece W1. Even in this case, down-cutting or up-cutting is to be performed on the periphery C1p as instructed. Therefore, the aspect described above can provide a machine tool that further improves convenience when removing burrs.

(2) Specific example of configuration of machine tool:

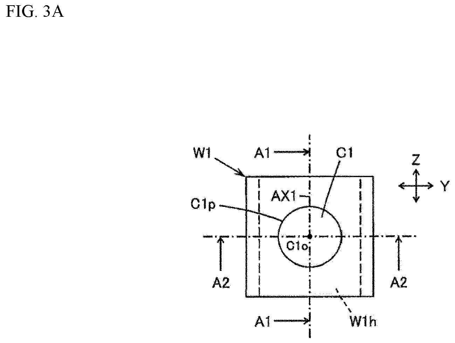

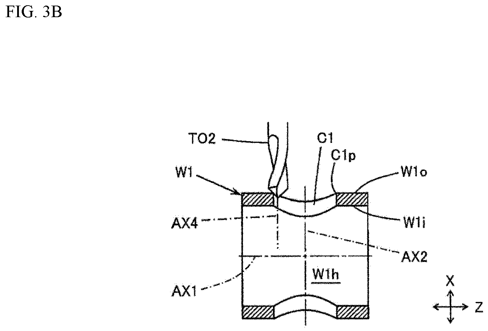

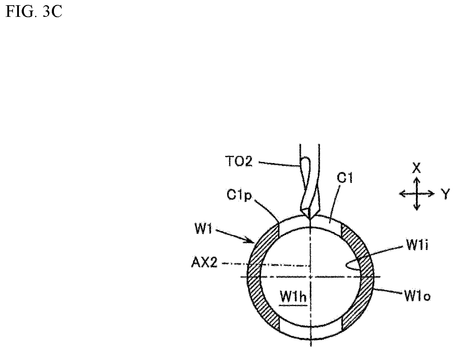

FIG. 1 is a front view schematically illustrating a configuration of the lathe 1 as an example of a machine tool. FIG. 2 schematically illustrates a configuration of an electric circuit of the lathe 1. FIGS. 3A to 3C schematically illustrate the cylindrical workpiece W1 having the cross hole C1. In this case, FIG. 3A is a plan view of the workpiece W1, FIG. 3B is a longitudinal sectional view at a position indicated by A1-A1 in FIG. 3A, and FIG. 3C is a transverse sectional view at a position indicated by A2-A2 in FIG. 3A;

In FIG. 1, reference sign D81 indicates an upward direction, reference sign D82 indicates a downward direction, reference sign D83 indicates a leftward direction, and reference sign D84 indicates a rightward direction. Note that these directions are based on a direction in which the lathe 1 shown in FIG. 1 is viewed. As shown in FIGS. 1 and 3A to 3C, control axes of the lathe 1 include the X-axis denoted by "X", the Y-axis denoted by "Y", the Z-axis denoted by "Z", and the C-axis denoted by "C". In this case, the X-axis, the Y-axis, and the Z-axis are straight axes while the C-axis is a rotation axis. The Z-axis direction is a spindle axis direction along the spindle axis AX1 to be a rotation center of the workpiece W1 and is a horizontal direction in FIG. 1. The X-axis direction is a direction perpendicular to the Z-axis and while the X-axis direction is a horizontal direction in FIG. 1, the X-axis direction may be a direction oriented upward and downward (upward direction D81 and downward direction D82). The Y-axis direction is a direction perpendicular to both the Z-axis and the X-axis. The C-axis is a rotation axis around the spindle axis AX1. Note that drawings to be referred to in the present specification simply show examples for describing aspects of the present application and are not intended to limit aspects of the present application. Descriptions of positional relationships of respective parts are simply illustrative. Therefore, reversing left and right sides, reversing a direction of rotation, and the like are also included in aspects of the present application. Identification of direction, position, and the like is not limited to exact congruence and includes deviations from exact congruence due to error.

The lathe 1 is an NC lathe including a headstock 10 provided with the spindle 11 having a gripping unit 12, a headstock driving unit 13, a supporting bed 25 with an attachment hole 26 for a guide bush 14, the tool post 30, a tool post driving unit 31, and an NC apparatus 70. In this case, the headstock 10 is a term collectively describing a front headstock 15 and a back headstock 20 that is also referred to as an opposite headstock. A front spindle 16 having a gripping unit 17 such as a collet is built into the front headstock 15. A back spindle 21 having a gripping unit 22 such as a collet is built into the back headstock 20. The spindle 11 is a term collectively describing the front spindle 16 and the back spindle 21 that is also referred to as an opposite spindle. The gripping unit 12 is a term collectively describing the gripping unit 17 and the gripping unit 22. The headstock driving unit 13 is a term collectively describing a front headstock driving unit 18 that moves the front headstock 15 along the Z-axis and a back headstock driving unit 23 that moves the back headstock 20 at least along the Z-axis. The lathe 1 shown in FIGS. 1 and 2 is a spindle-moving lathe in which the front spindle 16 moves in the Z-axis direction.

The front spindle 16 releasably grips the cylindrical workpiece W1 inserted, for example, from a rear end 16b, with the gripping unit 17 and can rotate together with the workpiece W1 around the spindle axis AX1. The front spindle 16 has a through-hole 16h that penetrates along the spindle axis AX1.

When the workpiece W1 prior to machining is a short material, the workpiece W1 may be supplied to the gripping unit 17 from a front end 16a of the front spindle 16. The NC apparatus 70 rotates the front spindle 16 around the spindle axis AX1 by driving a front spindle rotation driving unit 16c shown in FIG. 2 and controls a gripping state of the gripping unit 17 by driving a gripping actuator 17a shown in FIG. 2. The gripping unit 17 can be constituted of, for example, a collet. The front headstock driving unit 18 moves the front headstock 15 in the Z-axis direction according to a command from the NC apparatus 70. Therefore, the workpiece W1 being gripped by the front spindle 16 moves in the Z-axis direction.

A front end 21a of the back spindle 21 opposes the front end 16a of the front spindle 16. The back spindle 21 releasably grips the cylindrical workpiece W1 which is being machined and which protrudes forward from the front end 16a of the front spindle 16 with the gripping unit 22 and can rotate together with the workpiece W1 around the spindle axis AX1. The NC apparatus 70 rotates the back spindle 21 around the spindle axis AX1 by driving a back spindle rotation driving unit 21c shown in FIG. 2 and controls a gripping state of the gripping unit 22 by driving a gripping actuator 22a shown in FIG. 2. The gripping unit 22 can be constituted of, for example, a collet. The back headstock driving unit 23 moves the back headstock 20 in the Z-axis direction according to a command from the NC apparatus 70 and further moves the back headstock 20 in the X-axis direction or the Y-axis direction.

The guide bush 14 is attached to the supporting bed 25 in a state of being inside the attachment hole 26 of the supporting bed 25 and slidably supports the workpiece W1 protruding toward the back spindle 21 from the front spindle 16 (rightward direction D84) in the Z-axis direction. A portion which protrudes toward the back spindle 21 from the guide bush 14 in the workpiece W1 is to be machined by a tool TO1. When the guide bush is not in use, a front part of the front spindle 16 is inserted into the attachment hole 26 and a portion which protrudes toward the back spindle 21 from the front spindle 16 in the workpiece W1 is to be machined by the tool TO1.

A plurality of tools TO1 for machining the workpiece W1 gripped by at least one of the front spindle 16 and the back spindle 21 are attached to the tool post 30. The plurality of tools TO1 include cutting tools including a cut-off tool and rotary tools including a rotary drill and an endmill.

Rotary tools include a cross tool TO2 shown in FIG. 3B and the like and the deburring tool TO3 (for example, a ball endmill). The tool post 30 shown in FIG. 1 is a term collectively describing a gang-type tool post 32 and a back machining tool post 34. While only the deburring tool TO3 is shown on the back machining tool post 34 shown in FIG. 1, the tool TO1 is to collectively describe tools to be attached to the tool post 30 including the gang-type tool post 32 and the back machining tool post 34. Each tool post 30 includes a tool rotation driving unit 30c that rotates a rotary tool around a rotary tool center axis. The tool TO1 shown in FIG. 2 means a rotary tool. The tool post 30 may include a turret tool post. The tool post driving unit 31 shown in FIG. 1 is a term collectively describing a gang-type tool post driving unit 33 and a back machining tool post driving unit 35. The gang-type tool post driving unit 33 moves the gang-type tool post 32 along the X-axis according to a command from the NC apparatus 70 and moves the gang-type tool post 32 along the Y-axis according to a command from the NC apparatus 70. The back machining tool post driving unit 35 moves the back machining tool post 34 along the Y-axis according to a command from the NC apparatus 70. The tool post 30 performs front machining of the workpiece W1 gripped by the front spindle 16 with the tool TO1, performs the workpiece W1 after the front machining which is gripped by both the front spindle 16 and the back spindle 21 with the cut-off tool, and performs back machining of the workpiece W1 after cut off which is gripped by the back spindle 21 with the tool TO1. Accordingly, a product is formed from the workpiece W1.

As shown in FIG. 2, an operating unit 80, the front headstock driving unit 18, the front spindle rotation driving unit 16c, the gripping actuator 17a, the back headstock driving unit 23, the back spindle rotation driving unit 21c, the gripping actuator 22a, the gang-type tool post driving unit 33, the back machining tool post driving unit 35, the tool rotation driving unit 30c, and the like are connected to the NC apparatus 70. The front headstock driving unit 18, the back headstock driving unit 23, the gang-type tool post driving unit 33, and the back machining tool post driving unit 35 each include a servo motor and a servo amplifier (both not illustrated) and change a position of the spindle 11 or the tool post 30 according to a command from the NC apparatus 70. The NC apparatus 70 controls the position of the workpiece W1 or the tool TO1 by issuing commands to the elements (18, 23, 33, and 35). The front spindle rotation driving unit 16c and the back spindle rotation driving unit 21c each include a servo motor (for example, a built-in motor) and a servo amplifier (both not illustrated) and change a rotation angle of the spindle 11 according to a command from the NC apparatus 70. The NC apparatus 70 controls the rotation angle of the workpiece W1 around the spindle axis AX1 by issuing commands to the elements (16c and 21c).

The NC apparatus 70 includes a central processing unit (CPU) 71 which is a processor, a read only memory (ROM) 72 which is semiconductor memory, a random access memory (RAM) 73 which is semiconductor memory, a clock circuit 74, and an interface (I/F) 75 for peripheral elements (80, 18, 16c, 17a, 23, 21c, 22a, 33, 35, and 30c). A control program PR1 for interpreting and executing a machining program PR2 is written in the ROM 72. The ROM 72 may be a data-rewriteable semiconductor memory. The machining program PR2 created by an operator is rewriteably stored in the RAM 73. The machining program is also called an NC program. The CPU 71 uses the RAM 73 as a work area and executes the control program PR1 recorded in the ROM 72 to realize the functions of the NC apparatus 70.

The operating unit 80 includes an input unit 81 and a display unit 82 and functions as a user interface of the NC apparatus 70. For example, the input unit 81 is constituted of keys or a touch panel for accepting input of operations from the operator. For example, the display unit 82 is constituted of a display that displays contents of various settings for which input of operations from the operator has been accepted and various kinds of information related to the lathe 1. The operator can store the machining program PR2 in the RAM 73 using the operating unit 80 or an external computer (not illustrated).

In the present specific example, the NC apparatus 70, the headstock driving unit 13 (front headstock driving unit 18 and back headstock driving unit 23), and the spindle rotation driving unit (16c and 21c) constitute the control unit U1. The NC apparatus 70 and the headstock driving unit 13 control a relative positional relationship between the spindle 11 and the tool post 30 on the Z-axis along the spindle axis AX1 and perform control to change the cutting position P1 by the deburring tool TO3 along the periphery C1p. The NC apparatus 70 and the spindle rotation driving unit (16c and 21c) control the rotation of the spindle 11 on the C-axis around the spindle axis AX1.

The workpiece W1 shown in FIGS. 3A to 3C is a cylindrical shape having a hollow part W1h that penetrates along the spindle axis AX1. Accordingly, the workpiece W1 has the outer peripheral surface W1o facing outward and the inner peripheral surface W1i facing inward.

The cross tool TO2 that is a rotary tool for forming the cross hole C1 that connects the outer peripheral surface W1o to the hollow part W1h in the workpiece W1 is attached to the tool post 30. A drill or an endmill can be used as the cross tool TO2, and the NC apparatus 70 may form an opening in the workpiece W1 with a drill as the cross tool TO2 and subsequently form the cross hole C1 with an endmill as the cross tool TO2. The cross tool TO2 shown in FIG. 3B is arranged with its longitudinal direction oriented in the X-axis direction and is rotatable around a rotary tool center axis AX4 along the X-axis. The rotary tool center axis AX4 is oriented along a machining center axis AX2 of the cross hole C1 and is perpendicular to the spindle axis AX1 on an X-Z plane when viewed from the Y-axis direction as shown in FIG. 3B.

The cross hole C1 formed by the cross tool TO2 is a hole which penetrates the workpiece W1 so as to connect the outer peripheral surface W1o to the inner peripheral surface W1i around the machining center axis AX2 along the X-axis and may be described as a hole in an orientation along the machining center axis AX2 or a hole centered around the machining center axis AX2.

In the plan view shown in FIG. 3A, the cross hole C1 is a circle and a center C1o of the cross hole C1 is on the spindle axis AX1.

When the cross hole C1 is formed in the workpiece W1 by the cross tool TO2, burrs may possibly be created on a ridge of the periphery C1p of the cross hole C1. The term "ridge" is used in consideration of the possibility of burrs created on the periphery C1p on both the outer peripheral surface W1o and the inner peripheral surface W1i. While a dedicated tool may conceivably be used to remove the burrs, in the present specific example, the general-purpose deburring tool TO3 such as that illustrated in FIG. 4B is attached to the tool post 30 such as the back machining tool post 34. The deburring tool TO3 shown in FIG. 4B is a ball endmill spinnable around the deburring tool center axis AX3 and includes, in a tip part thereof, a spherical cutting unit TO3b that assumes a spherical shape when rotating. The tool rotation driving unit 30c of the tool post 30 rotates the deburring tool TO3 around the deburring tool center axis AX3. Note that while the orientation of the deburring tool center axis AX3 may be an orientation along the machining center axis AX2, in the present specific example, the orientation of the deburring tool center axis AX3 is an orientation along the spindle axis AX1 as shown in FIG. 4B.

First, an example of cutting the periphery C1p of the cross hole C1 on the outer peripheral surface W1o of the workpiece W1 with the deburring tool TO3 will be described.

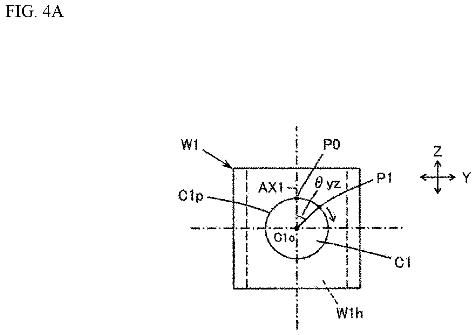

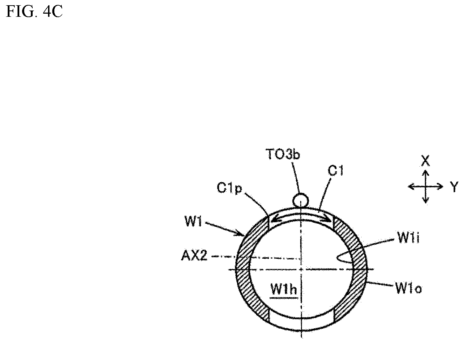

FIG. 4A schematically illustrates the cutting position P1 that changes along the periphery C1p of the cross hole C1. FIG. 4B is a longitudinal sectional view which corresponds to a position indicated by A1-A1 in FIG. 3A and which schematically illustrates a situation where the deburring tool TO3 in an orientation along the spindle axis AX1 is arranged on the outer peripheral surface W1o of the cylindrical workpiece W1. FIG. 4C is a transverse sectional view which corresponds to a position indicated by A2-A2 in FIG. 3A and which schematically illustrates a situation where the spherical cutting unit TO3b is arranged on the outer peripheral surface W1o.

In FIG. 4A, the cutting position P1 of the periphery C1p by the spherical cutting unit TO3b changes along the periphery C1p. When the deburring tool TO3 in an orientation along the spindle axis AX1 is a ball endmill, an orientation in which the cutting position P1 changes along the periphery C1p changes midway through cutting of the periphery C1p so that down-cutting or up-cutting instructed by a command is maintained.

Details will be provided later. Let $\theta yz$ be an angle between a line segment connecting the center C1o and a reference position P0 on the spindle axis AX1 and a line segment connecting the center C1o and the cutting position P1. The NC apparatus 70 according to the present specific example causes the workpiece W1 to reciprocate in the Z-axis direction so as to align the workpiece W1 with the cutting position P1 while rotating the deburring tool TO3 as shown in FIG. 4B and rotates the workpiece W1 so as to align with the cutting position P1 as shown in FIG. 4C. Accordingly, burrs of the periphery C1p of the cross hole C1 on the outer peripheral surface W1o of the workpiece W1 are removed. Due to the deburring tool TO3 being a ball endmill, the ridge of the periphery C1p is cut so that an amount of cutting is constant over the entire periphery C1p. Accordingly, deburring of the periphery C1p can be performed using a general-purpose ball endmill instead of a specialized tool.

FIG. 5A is a longitudinal sectional view which corresponds to a position indicated by A1-A1 in FIG. 3A and which schematically illustrates a situation where the deburring tool TO3 in an orientation along the spindle axis AX1 is arranged on the inner peripheral surface W1i of the cylindrical workpiece W1. FIG. 5B is a transverse sectional view which corresponds to a position indicated by A2-A2 in FIG. 3A and which schematically illustrates a situation where the spherical cutting unit TO3b is arranged on the inner peripheral surface W1i. Note that the cutting position P1 of the periphery C1p by the spherical cutting unit TO3b changes along the periphery C1p as shown in FIG. 4A. When the deburring tool TO3 in an orientation along the spindle axis AX1 is a ball endmill, an orientation in which the cutting position P1 changes along the periphery C1p changes midway through cutting of the periphery C1p so that down-cutting or up-cutting instructed by a command is maintained.

As shown in FIG. 5B, a maximum diameter TD around the deburring tool center axis AX3 in a portion in the deburring tool TO3 to be inserted into the cylindrical workpiece W1 is smaller than an inner diameter ID of the workpiece W1. Therefore, the NC apparatus 70 causes the workpiece W1 to reciprocate in the Z-axis direction so as to align the workpiece W1 with the cutting position P1 while rotating the deburring tool TO3 as shown in FIG. 5A and rotates the workpiece W1 so as to align with the cutting position P1 as shown in FIG. 5B. Accordingly, burrs of the periphery C1p of the cross hole C1 on the inner peripheral surface W1i of the workpiece W1 are removed. Due to the deburring tool TO3 being a ball endmill, the ridge of the periphery C1p is cut so that an amount of cutting is constant over the entire periphery C1p. Accordingly, deburring of the periphery C1p can be performed using a general-purpose ball endmill instead of a specialized tool.

Some lathes may not allow the deburring tool TO3 to be arranged in an orientation along the machining center axis AX2. For example, when the orientation of the tool TO1 attached to the back machining tool post 34 is limited to an orientation along the spindle axis AX1 as shown in FIG. 1 and the deburring tool TO3 is required to be attached to the back machining tool post 34, the deburring tool TO3 will not be oriented along the machining center axis AX2. In addition, in some cases, even when the tool TO1 can be arranged in an orientation along the machining center axis AX2 on the tool post 30, the deburring tool TO3 cannot be mounted on the tool post 30 because another tool is attached to a tool attachment location in an orientation along the machining center axis AX2 of the tool post 30 or for some other reason.

The deburring according to the present specific example can be readily performed by the deburring tool TO3 in an orientation along the spindle axis AX1.

Let us now assume a case of removing burrs remaining on the periphery C1p of the cross hole C1 at a plurality of locations on the inner peripheral surface W1i of the workpiece W1. When the orientation of the deburring tool TO3 is along the machining center axis AX2, the deburring tool TO3 must be significantly retracted in the direction of the machining center axis when changing the cross hole C1 that is an object to be deburred of the inner peripheral surface W1i. This is because after inserting the deburring tool TO3 into a given cross hole C1 to remove burrs on the inner peripheral surface W1i, the deburring tool TO3 must be retracted from the cross hole C1 and inserted into another cross hole C1 to remove burrs on the inner peripheral surface W1i. The larger the amount of retraction of the deburring tool TO3, the longer a cycle time of workpiece machining.

On the other hand, when the orientation of the deburring tool TO3 is along the spindle axis AX1, a small amount of retraction of the deburring tool TO3 will suffice when changing the cross hole C1 that is an object to be deburred of the inner peripheral surface W1i. This is because after inserting the deburring tool TO3 into the hollow part W1h of the workpiece W1 to remove burrs on the inner peripheral surface W1i of a given cross hole C1, burrs on the inner peripheral surface W1i of another cross hole C1 need only be removed by keeping the deburring tool TO3 inserted into the hollow part W1h. The smaller the amount of retraction of the deburring tool TO3, the shorter the cycle time of workpiece machining.

It is not easy to command the cutting position P1 shown in FIG. 4A in the three directions of the X-axis, the Y-axis, and the Z-axis. This is because not only do the Y-axis coordinate and the Z-axis coordinate change as the cutting position P1 changes, the X-axis coordinate also changes because the ridge of the periphery C1p of the cross hole C1 is on the outer peripheral surface W1o or the inner peripheral surface W1i of the workpiece W1. If three-dimensional coordinates (X-axis coordinate, Y-axis coordinate, and Z-axis coordinate) of the cutting position P1 are not appropriately calculated, there is a possibility that interference between the deburring tool TO3 and the workpiece W1 may occur and the periphery C1p may not be cut properly.

The present specific example avoids the possibility described above by controlling the relative Z-axis coordinate of the deburring tool TO3 and the C-axis angle of the workpiece W1 based on parameters that are easily comprehended by the operator.

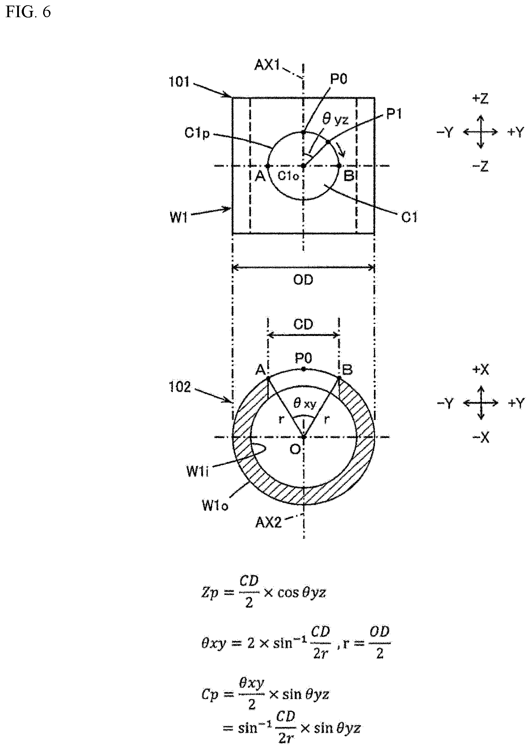

First, referring to FIG. 6, an example of control of the cutting position P1 when cutting the periphery C1p of the cross hole C1 on the outer peripheral surface W1o of the workpiece W1 will be described. FIG. 6 schematically shows an example of determining the Z-axis coordinate Zp and the C-axis angle Cp corresponding to the cutting position P1 based on a diameter value (CD) of the cross hole (C1) and an outer diameter value (OD) of the workpiece W1. In FIG. 6, a plan view 101 of the workpiece W1 is shown in an upper part, a transverse sectional view 102 of the workpiece W1 is shown below the plan view 101, and calculation formulas of the Z-axis coordinate Zp and the C-axis angle Cp are shown in a lower part. In the plan view 101, an upward direction is a +Z direction in the Z-axis direction, a downward direction is a -Z direction in the Z-axis direction, a rightward direction is a +Y direction in the Y-axis direction, and a leftward direction is a -Y direction in the Y-axis direction. In the transverse sectional view 102, an upward direction is a +X direction in the X-axis direction, a downward direction is a -X direction in the X-axis direction, a rightward direction is the +Y direction in the Y-axis direction, and a leftward direction is the -Y direction in the Y-axis direction

The value CD represents a diameter corresponding to the periphery C1p when viewing the cross hole C1 from the X-axis direction that is the machining center axis direction. The value OD represents a diameter corresponding to a circumference that passes through the periphery C1p around the spindle axis AX1 on a cross section (refer to transverse sectional view 102) which passes the center C1o of the cross hole C1 and which is perpendicular to the spindle axis AX1 or, in other words, the outer peripheral surface W1o. The angle $\theta yz$ is an angle between the line segment connecting the center C1o and the reference position P0 and the line segment connecting the center C1o and the cutting position P1. When the cutting position P1 is the reference position P0, it is assumed that the angle $\theta yz$ is 0° or 360° and the C-axis angle Cp is 0°. FIG. 6 also shows the point B corresponding to angle $\theta yz$ = 90° and the point A corresponding to angle $\theta yz$ = 270° (or - 90°).

A rate of change of the angle $\theta yz$ is determined based on, for example, a feed rate. In the transverse sectional view 102, the angle $\theta xy$ is an angle between a line segment connecting the center point O and the point A which corresponds to the spindle axis AX1 and a line segment connecting the center point O and the point B.

The Z-axis coordinate Zp is a straight axis coordinate corresponding to the cutting position P1 that changes along the periphery C1p on the Z-axis. When the tool post 30 to which the deburring tool TO3 is attached does not move in the Z-axis direction, the Z-axis coordinate Zp corresponds to a coordinate on the Z-axis of the workpiece W1 being gripped by the spindle 11. The Z-axis coordinate Zp is represented by the following equation, using the diameter value CD corresponding to the periphery C1p and the angle $\theta yz$.

$$Zp = (CD/2) \times \cos\theta yz \cdots (1)$$

Accordingly, the Z-axis coordinate Zp corresponding to the cutting position P1 that changes along the periphery C1p is determined based on the value CD.

A radius value r corresponding to the outer peripheral surface W1o in the transverse sectional view 102 is half of the value OD.

$$r = OD/2 \cdots (2)$$

A radius value CD/2 corresponding to the value CD is represented by the following equation, using the radius value r and the angle $\theta xy$ between the line segment between O and A and the line segment between O and B.

$$CD/2 = r \times \sin(\theta xy/2) \cdots (3)$$

Since it follows from the equation (3) above that $\sin(\theta xy/2) = CD/2r$, the angle $\theta xy$ is represented by the following equation.

$$\theta xy = 2 \times \arcsin(CD/2r) \cdots (4)$$

Note that "arcsin" is the inverse function of "sin" and is also written as "sin⁻¹".

It follows from the above equation (4) that the angle θxy is a fixed value calculated from the value CD and the value OD.

The C-axis angle Cp is a rotation angle corresponding to the cutting position P1 that changes along the periphery C1p on the C-axis and is the angle on the C-axis of the workpiece W1 gripped by the spindle 11. Since the C-axis angle Cp varies within a range expressed as -(θxy/2) ≤ Cp ≤ +(θxy/2), using the angle θxy between the line segment between O and A and the line segment between O and B and the angle θyz corresponding to the cutting position P1, the C-axis angle Cp is represented by the following equation.

$$Cp = (\theta xy/2) \times \sin\theta yz$$

$$= \arcsin(CD/2r) \times \sin\theta yz \cdots (5)$$

Accordingly, the C-axis angle Cp corresponding to the cutting position P1 that changes along the periphery C1p is determined based on the value CD and the value OD.

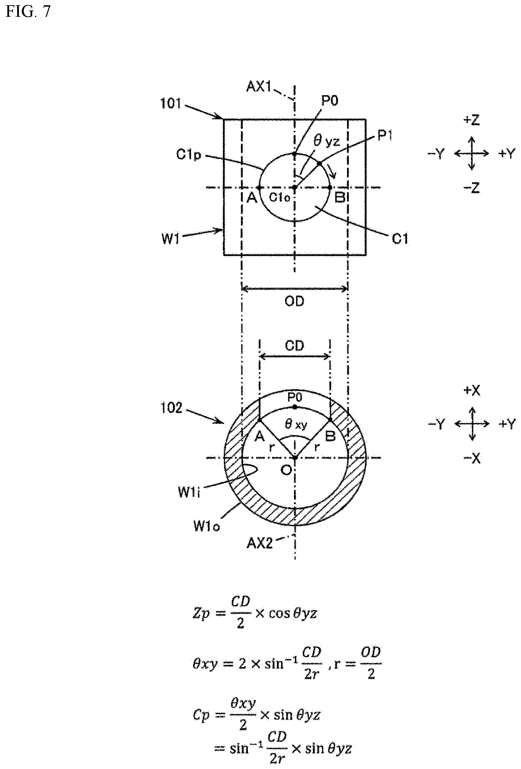

The same idea can be applied to cutting the periphery C1p of the cross hole C1 on the inner peripheral surface W1i of the workpiece W1 as illustrated in FIG. 7. FIG. 7 schematically shows an example of determining the Z-axis coordinate Zp and the C-axis angle Cp corresponding to the cutting position P1 based on a diameter value (CD) of the cross hole (C1) and an inner diameter value (OD) of the workpiece W1. In FIG. 7, the plan view 101 of the workpiece W1 is shown in an upper part, the transverse sectional view 102 of the workpiece W1 is shown below the plan view 101, and calculation formulas of the Z-axis coordinate Zp and the C-axis angle Cp are shown in a lower part.

The value CD is the same as the case where the surface to be deburred is the outer peripheral surface W1o and represents a diameter corresponding to the periphery C1p when viewing the cross hole C1 from the X-axis direction. The value OD represents a diameter corresponding to a circumference that passes through the periphery C1p around the spindle axis AX1 on a cross section (refer to transverse sectional view 102) which passes the center C1o of the cross hole C1 and which is perpendicular to the spindle axis AX1 or, in other words, the inner peripheral surface W1i. FIG. 7 also shows the point B corresponding to angle θyz = 90° and the point A corresponding to angle θyz = 270° (or - 90°). In the transverse sectional view 102, the angle θxy is an angle between a line segment connecting the center point O and the point A which corresponds to the spindle axis AX1 and a line segment connecting the center point O and the point B.

The Z-axis coordinate Zp is the same as in the case where the surface to be deburred is the outer peripheral surface W1o and is represented by the following equation, using the diameter value CD corresponding to the periphery C1p and the angle θyz.

$$Zp = (CD/2) \times \cos\theta yz \cdots (6)$$

A radius value r corresponding to the inner peripheral surface W1i in the transverse sectional view 102 is half of the value OD.

$$r = OD/2 \cdots (7)$$

A radius value CD/2 corresponding to the value CD is represented by the following equation, using the radius value r and the angle θxy between the line segment between O and A and the line segment between O and B.

$$CD/2 = r \times \sin(\theta xy/2) \cdots (8)$$

From the equation (8) above, the angle θxy is represented by the following equation.

$$\theta xy = 2 \times \arcsin(CD/2r) \cdots (9)$$

Since the C-axis angle Cp varies within a range expressed as -(θxy/2) ≤ Cp ≤ +(θxy/2), using the angle θxy between the line segment between O and A and the line segment between O and B and the angle θyz corresponding to the cutting position P1, the C-axis angle Cp is represented by the following equation.

$$Cp = (\theta xy/2) \times \sin\theta yz$$

$$= \arcsin(CD/2r) \times \sin\theta yz \cdots (10)$$

From the above, by determining the Z-axis coordinate Zp and the C-axis angle Cp based on the value CD and the value OD, the deburring processing can be controlled by 2-axis control of the Z-axis and the C-axis. Therefore, by preparing a deburring command CM1 (refer to FIG. 9) suitable for deburring with 2-axis control, deburring can be performed without having to command the cutting position P1 in the three axes of the X-axis, the Y-axis, and the Z-axis.

When the orientation of the deburring tool TO3 is along the spindle axis AX1, the relative movement direction of the deburring tool TO3 is to be reversed midway through cutting when the cutting position P1 makes one clockwise turn or one counterclockwise turn along the periphery C1p. When the deburring tool TO3 rotates clockwise, if the cutting position P1 makes one clockwise turn or one counterclockwise turn along the periphery C1p, down-cutting and up-cutting are interchanged midway through cutting.

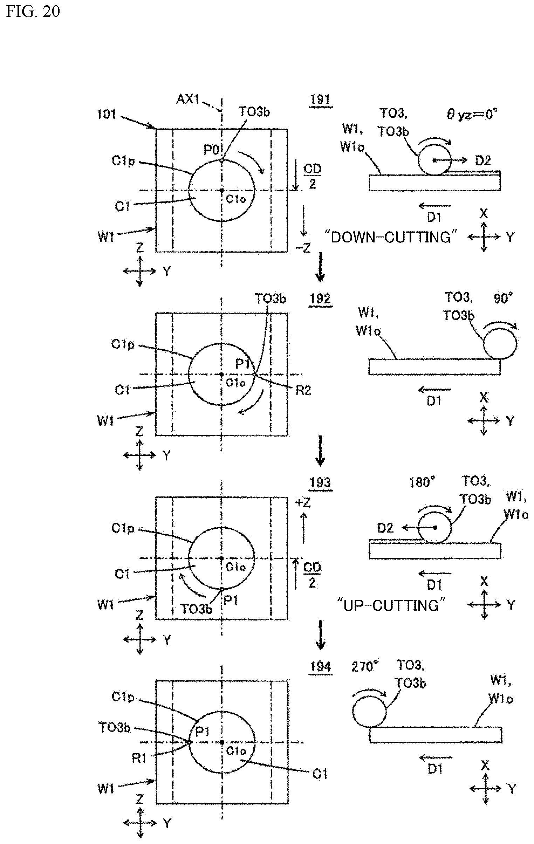

FIG. 20 schematically illustrates how an interchange between down-cutting and up-cutting occurs midway through cutting of the periphery C1p of the cross hole C1. A left side of FIG. 20 shows the plan view 101 of the workpiece W1 in states 191 to 194 and a right side of FIG. 20 shows a cutting state of the workpiece W1 in the states 191 to 194. As a prerequisite, let us assume that the deburring tool TO3 is a right-handed ball endmill, the deburring tool TO3 rotates clockwise around the deburring tool center axis AX3, and the cutting position P1 moves clockwise along the periphery C1p on the outer peripheral surface W1o.

In the state 191 where the cutting position P1 is at the reference position P0, the angle $\theta yz$ is 0°, the workpiece W1 is at a position after moving by a distance CD/2 in the -Z direction, and the C-axis angle Cp is 0°. At this point, since the relative movement direction D2 of the spherical cutting unit TO3b in the Y-axis direction along the cutting direction D1 (leftward direction in FIG. 20) that is a direction of rotation of the spherical cutting unit TO3b is opposite to the cutting direction D1, down-cutting is performed on the periphery C1p at the reference position P0. Down-cutting may be described as cutting in which the cutting direction D1 by the rotating deburring tool TO3 becomes opposite to the relative movement direction D2 of the deburring tool TO3.

In the state 192 where the cutting position P1 is $\theta yz = 90°$, the Z-axis coordinate Zp becomes 0 and the C-axis angle Cp becomes $+\theta xy/2$. At this point, since the orientation of the relative movement direction D2 of the spherical cutting unit TO3b in the Y-axis direction changes, the cutting position P1 is at a reversal position (referred to as the second reversal position R2 in FIG. 20) of the relative movement direction D2.

In the state 193 where the cutting position P1 is $\theta yz = 180°$, the workpiece W1 is at a position after moving by a distance CD/2 in the +Z direction and the C-axis angle Cp becomes 0°. At this point, since the relative movement direction D2 of the spherical cutting unit TO3b in the Y-axis direction is the same as the cutting direction D1, up-cutting is performed on the periphery C1p. Up-cutting can be described as cutting in which the cutting direction D1 and the relative movement direction D2 are the same.

In the state 194 where the cutting position P1 is $\theta yz = 270°$ (or -90°), the Z-axis coordinate Zp becomes 0 and the C-axis angle Cp becomes $-\theta xy/2$. At this point, since the orientation of the relative movement direction D2 of the spherical cutting unit TO3b in the Y-axis direction changes, the cutting position P1 is at a reversal position (referred to as the first reversal position R1 in FIG. 20) of the relative movement direction D2.

Note that when the cutting position P1 moves counterclockwise along the periphery C1p on the outer peripheral surface W1o, contrary to the description given above, up-cutting is performed on the periphery C1p at the reference position P0 where $\theta yz = 0°$ while down-cutting is performed on the periphery C1p at a position of $\theta yz = 180°$. In addition, when the cutting position P1 moves clockwise along the periphery C1p on the inner peripheral surface W1i, contrary to the case of the outer peripheral surface W1o, up-cutting is performed on the on the periphery C1p at the reference position P0 where $\theta yz = 0°$ while down-cutting is performed on the periphery C1p at a position of $\theta yz = 180°$.

In general, down-cutting is said to extend the life of rotary tools compared to up-cutting. On the other hand, up-cutting is said to produce a shinier cutting surface and to discharge chips more easily than down-cutting. When down-cutting and up-cutting are interchanged midway through cutting, a cutting surface condition may change between a down-cut portion and an up-cut portion.

According to the above, a mechanism to easily create a machining program with down-cutting or up-cutting in mind is desired.

In the present specific example, the lathe 1 is to automatically perform down-cutting or up-cutting on the periphery C1p according to a deburring command that instructs down-cutting or up-cutting.

(3) First specific example of deburring processing:

There are two types of ball endmills: a right-handed type and a left-handed type, and the right-handed type is usually used. Therefore, it is expedient to be able to perform cutting while maintaining down-cutting or up-cutting while using the deburring tool TO3 of the right-handed type.

FIG. 8A schematically shows an example of a movement of the cutting position P1 when performing down-cutting of the outer peripheral surface W1o or up-cutting of the inner peripheral surface W1i. As a prerequisite, let us assume that the deburring tool TO3 is a right-handed rotary tool and the deburring tool TO3 rotates clockwise around the deburring tool center axis AX3.

As described above, when the cutting position P1 makes one clockwise turn along the periphery C1p, down-cutting is changed to up-cutting at the second reversal position R2 where $\theta yz = 90°$ and up-cutting is changed to down-cutting at the first reversal position R1 where $\theta yz = 270°$ (or -90°). Therefore, the cutting path PA0 along the periphery C1p of the cross hole C1 is divided into the first path PA1 and the second path PA2 at the reversal positions (R1 and R2) and an orientation of changing the cutting position P1 along the periphery C1p is changed between the first path PA1 and the second path PA2. In this case, let us assume that the first path PA1 is a path from the first reversal position R1 where $\theta yz = -90°$ to the second reversal position R2 where $\theta yz = 90°$ via the reference position P0 where $\theta yz = 0°$. Let us assume that the second path PA2 is a path from the first reversal position R1 where $\theta yz = 270°$ to the second reversal position R2 where $\theta yz = 90°$ via an intermediate position P2 where $\theta yz = 180°$. Note that the angle $\theta yz$ of the first reversal position R1 is represented by -90° and 270° for the convenience of calculating the Z-axis coordinate Zp and the C-axis angle Cp according to the cutting position P1 that changes along the periphery C1p.

When the cutting position P1 changes along the first path PA1, the relative movement direction D2 of the spherical cutting unit TO3b that rotates clockwise changes to the +Y direction. This means that down-cutting is performed when cutting the outer peripheral surface W1o where the cutting direction D1 (refer to FIG. 20) is opposite to the relative movement direction D2, and up-cutting is performed when cutting the inner peripheral surface W1i where the cutting direction D1 is the same as the relative movement direction D2. Even when the cutting position P1 changes along the second path PA2, the relative movement direction D2 of the spherical cutting unit TO3b that rotates clockwise changes to the +Y direction. This means that down-cutting is performed when cutting the outer peripheral surface W1o where the cutting direction D1 is opposite to the relative movement direction D2, and up-cutting is performed when cutting the inner peripheral surface W1i where the cutting direction D1 is the same as the relative movement direction D2.

When down-cutting of the outer peripheral surface W1o or up-cutting of the inner peripheral surface W1i is instructed, an orientation from the first reversal position R1 to the second reversal position R2 in the Y-axis direction is assumed to be the first orientation D21. When the relative movement direction D2 of the deburring tool TO3 with respect to the cutting direction D1 is the first orientation D21, the cut instructed by the deburring command CM1 is to be performed on the periphery C1p. The first path PA1 and the second path PA2 can be described as paths in which the relative movement direction D2 of the spherical cutting unit TO3b becomes the first orientation D21 and the relative movement direction D2 does not become the second orientation D22 that is opposite to the first orientation D21.

In the case described above, the NC apparatus 70 performs a "figure 8" control for changing the cutting position P1 from the first reversal position R1 to the second reversal position R2 on the first path PA1 and changing the cutting position P1 from the first reversal position R1 to the second reversal position R2 on the second path PA2. FIG. 8A shows an example of a "figure 8" path of first changing the cutting position P1 on the first path PA1, subsequently moving the cutting position P1 from the second reversal position R2 to the first reversal position R1, and then changing the cutting position P1 on the second path PA2. Needless to say, the NC apparatus 70 may first change the cutting position P1 on the second path PA2, subsequently move the cutting position P1 from the second reversal position R2 to the first reversal position R1, and then change the cutting position P1 on the first path PA1. In any case, down-cutting of the outer peripheral surface W1o or up-cutting of the inner peripheral surface W1i is maintained.

FIG. 8B schematically shows an example of a movement of the cutting position P1 when performing up-cutting of the outer peripheral surface W1o or down-cutting of the inner peripheral surface W1i. Again, as a prerequisite, let us assume that the deburring tool TO3 is a right-handed rotary tool and the deburring tool TO3 rotates clockwise around the deburring tool center axis AX3. Note that since the first orientation D21 described above is reversed between the case of FIG. 8A and the case of FIG. 8B, the first reversal position R1 is a position where θyz = 90° and the second reversal position R2 is a position where θyz = 270° (or -90°).

In the case of FIG. 8B, let us assume that the first path PA1 is a path from the first reversal position R1 where θyz = 90° to the second reversal position R2 where θyz = -90° via the reference position P0 where θyz = 0°. Let us assume that the second path PA2 is a path from the first reversal position R1 where θyz = 90° to the second reversal position R2 where θyz = 270° via the intermediate position P2 where θyz = 180°.

When the cutting position P1 changes along the first path PA1, the relative movement direction D2 of the spherical cutting unit TO3b that rotates clockwise changes to the -Y direction. Even when the cutting position P1 changes along the second path PA2, the relative movement direction D2 of the spherical cutting unit TO3b that rotates clockwise changes to the -Y direction. This means that up-cutting is performed when cutting the outer peripheral surface W1o where the cutting direction D1 (refer to FIG. 20) is the same as the relative movement direction D2, and down-cutting is performed when cutting the inner peripheral surface W1i where the cutting direction D1 is opposite to the relative movement direction D2.

When the relative movement direction D2 of the deburring tool TO3 with respect to the cutting direction D1 is the first orientation D21, the cut instructed by the deburring command CM1 is to be performed on the periphery C1p.

Even in the case described above, the NC apparatus 70 performs a "figure 8" control for changing the cutting position P1 from the first reversal position R1 to the second reversal position R2 on the first path PA1 and changing the cutting position P1 from the first reversal position R1 to the second reversal position R2 on the second path PA2. FIG. 8B shows an example of a "figure 8" path of first changing the cutting position P1 on the first path PA1, subsequently moving the cutting position P1 from the second reversal position R2 to the first reversal position R1, and then changing the cutting position P1 on the second path PA2. Needless to say, the NC apparatus 70 may first change the cutting position P1 on the second path PA2, subsequently move the cutting position P1 from the second reversal position R2 to the first reversal position R1, and then change the cutting position P1 on the first path PA1. In any case, up-cutting of the outer peripheral surface W1o or down-cutting of the inner peripheral surface W1i is maintained.

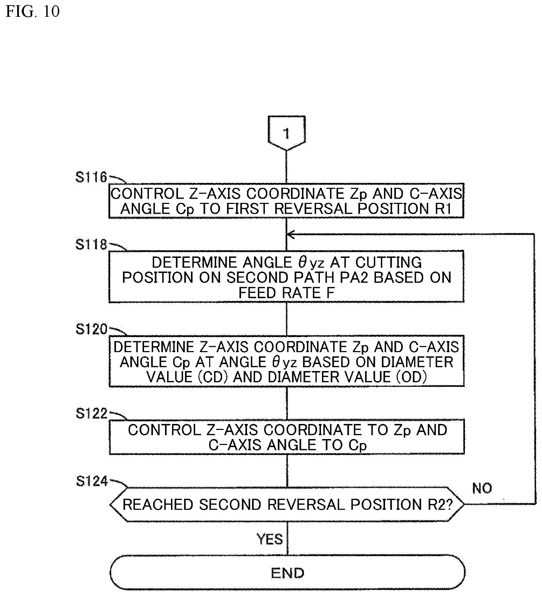

FIGS. 9 and 10 schematically illustrate the deburring processing performed by the NC apparatus 70. FIG. 9 also shows the deburring command CM1 included in the machining program PR2. The NC apparatus 70 shown in FIG. 2 starts the deburring processing upon reading the deburring command CM1 from the machining program PR2. As a prerequisite, let us assume that the deburring tool TO3 is a right-handed rotary tool, the deburring tool TO3 rotates clockwise around the deburring tool center axis AX3, and the number of revolutions (unit: rpm) of the spindle 11 has been instructed in advance.

The deburring command CM1 shown in FIG. 9 has the format "G167 D** X** R** P** F**". "G167" indicates a deburring command for changing an orientation of changing the cutting position P1 along the periphery C1p midway through cutting. The argument "**" after D indicates the value OD (mm) of the outer diameter or the inner diameter of the workpiece W1. The argument "**" after X indicates the value CD (mm) of the diameter corresponding to the periphery C1p when viewing the cross hole C1 from the X-axis direction. The argument "**" after R indicates which of down-cutting and up-cutting is to be performed, in which case "0" means down-cutting and "1" means up-cutting. In other words, the deburring command CM1 is a command for instructing whether to perform down-cutting on the periphery C1p or to perform up-cutting on the periphery C1p. Hereinafter, the argument of R may be expressed as R = 0 or R = 1. The argument "**" after P indicates which of inner diameter machining in which the periphery C1p is cut on the inner peripheral surface W1i and outer diameter machining in which the periphery C1p is cut on the outer peripheral surface W1o is to be performed, in which case "0" means inner diameter machining and "1" means outer diameter machining. Hereinafter, the argument of P may be expressed as P = 0 or P = 1. The argument "**" after F indicates a feed rate per minute which is distributed between a speed of movement of the workpiece W1 along the Z-axis and a rotation speed of the workpiece W1 on the C-axis.

Note that the deburring command CM1 may include an argument indicating a rotation speed when the deburring tool TO3 spins.

When the cutting position P1 makes a 1/2 turn on the periphery C1p, a total movement distance of the workpiece W1 along the Z-axis is CD (mm) and a total rotation amount of the workpiece W1 on the C-axis is $\theta xy$ (deg). For example, when it is assumed that a rotation amount of 1° corresponds to a movement distance of 1 mm, time (denoted by T(min)) required by the cutting position P1 to make a 1/2 turn on the periphery C1p can be calculated by the following equation.

$$T = (CD^2 + \theta xy^2)^{1/2}/F \cdots (11)$$

If t (min) denotes the time elapsed since the start of movement of the cutting position P1 from the position where $\theta yz = -90°$ to the position where $\theta yz = 90°$, the angle $\theta yz$ (deg) corresponding to the cutting position P1 can be calculated, for example, by the following formula.

$$\theta yz = 180 \times (t/T) - 90 \cdots (12)$$

In addition, if t (min) denotes the time elapsed since the start of movement of the cutting position P1 from the position where $\theta yz = 270°$ to the position where $\theta yz = 90°$, the angle $\theta yz$ (deg) corresponding to the cutting position P1 can be calculated, for example, by the following formula.

$$\theta yz = 270 - 180 \times (t/T) \cdots (13)$$

Therefore, the Z-axis coordinate Zp and the C-axis angle Cp can be determined by applying the angle $\theta yz$ corresponding to the cutting position P1 that changes along the periphery C1p to the above equations (1) to (10) together with the value CD and the value OD.

When an amount of cutting of the periphery C1p is to be reduced in consideration of the size of the spherical cutting unit TO3b of the deburring tool TO3, the command value of the value CD may be set slightly smaller than the actual diameter of the periphery C1p. Conversely, when an amount of cutting of the periphery C1p is to be increased, the command value of the value CD may be set slightly larger than the actual diameter of the periphery C1p. Furthermore, the amount of cutting of the periphery C1p can also be adjusted by adding, to the deburring command CM1, an argument that specifies an amount of offset for adjusting the amount of cutting of the periphery C1p.

When the deburring processing shown in FIG. 9 starts, the NC apparatus 70 acquires the arguments of the deburring command CM1 described above (step S102). Hereinafter, the term "step" will be omitted. By acquiring the deburring command CM1, the value CD of the diameter corresponding to the periphery C1p when viewed from the X-axis direction, the value OD of the diameter corresponding to a circumference that passes through the periphery C1p when viewed from the Z-axis direction, the argument indicating whether down-cutting or up-cutting is to be performed, and the argument indicating whether inner diameter machining or outer diameter machining is to be performed are acquired.

After the deburring command CM1 is acquired, the NC apparatus 70 determines a movement path of the cutting position P1 based on arguments of R and P (S104).

When P = 1 (outer diameter machining) and R = 0 (down-cutting) or P = 0 (inner diameter machining) and R = 1 (up-cutting), the NC apparatus 70 determines a movement path of the cutting position P1 so as to change the cutting position P1 along the periphery C1p as shown in FIG. 8A. As a result, after changing from the first reversal position R1 where $\theta yz = -90°$ to the second reversal position R2 where $\theta yz = 90°$ on the first path PA1, the cutting position P1 is moved to the first reversal position R1, and on the second path PA2, changes from the first reversal position R1 where $\theta yz = 270°$ to the second reversal position R2 where $\theta yz = 90°$.

When P = 1 (outer diameter machining) and R = 1 (up-cutting) or P = 0 (inner diameter machining) and R = 0 (down-cutting), the NC apparatus 70 determines a movement path of the cutting position P1 so as to change the cutting position P1 along the periphery C1p as shown in FIG. 8B. As a result, after changing from the first reversal position R1 where $\theta yz = 90°$ to the second reversal position R2 where $\theta yz = -90°$ on the first path PA1, the cutting position P1 is moved to the first reversal position R1, and on the second path PA2, changes from the first reversal position R1 where $\theta yz = 90°$ to the second reversal position R2 where $\theta yz = 270°$.

After determining the movement path, the NC apparatus 70 controls the Z-axis coordinate Zp and the C-axis angle Cp to the first reversal position R1 (S106). For example, the NC apparatus 70 performs control so as to rotate the deburring tool TO3 around the deburring tool center axis AX3, associates the coordinate of the workpiece W1 on the Z-axis to Zp = 0, controls the C-axis angle of the workpiece W1 to $-\theta xy/2$ or $\theta xy/2$, and applies the spherical cutting unit TO3b of the deburring tool TO3 to the first reversal position R1 of the periphery C1p. Since the rotation of the deburring tool TO3 need only start before the spherical cutting unit TO3b is applied to the reference position P0, the deburring tool TO3 can be rotated after the coordinate of the workpiece W1 on the Z axis is controlled to Zp = 0 or after the C-axis angle of the workpiece W1 is controlled to $-\theta xy/2$ or $\theta xy/2$.

Subsequently, according to equations (11) and (12) described above, the NC apparatus 70 determines the angle $\theta yz$ corresponding to the cutting position P1 on the first path PA1 based on a feed rate F (S108). Furthermore, according to equations (1) to (10) described above, the NC apparatus 70 determines the Z-axis coordinate Zp and the C-axis angle Cp at the angle $\theta yz$ based on the value CD and the value OD (S110). According to processing up to S110, the Z-axis coordinate Zp corresponding to the cutting position P1 that changes along the periphery C1p on the Z-axis and the C-axis angle Cp corresponding to the cutting position P1 on the C-axis are determined.

After determining the Z-axis coordinate Zp and the C-axis angle Cp, the NC apparatus 70 controls the relative positional relationship between the workpiece W1 and the deburring tool TO3 to the Z-axis coordinate Zp and controls the workpiece W1 around the spindle axis AX1 to the C-axis angle Cp (S112). Subsequently, the NC apparatus 70 determines whether or not the cutting position P1 has reached the second reversal position R2 (S114). When the cutting position P1 has not reached the second reversal position R2, the NC apparatus 70 repeats the processing of S108 to S114. When the cutting position P1 has reached the second reversal position R2, the NC apparatus 70 controls the Z-axis coordinate Zp and the C-axis angle Cp to the first reversal position R1 (S116 in FIG. 10). Since the Z-axis coordinate Zp is 0 and the deburring tool TO3 spins around the deburring tool center axis AX3, the NC apparatus 70 controls the C-axis angle of the workpiece W1 to $-\theta xy/2$ or $\theta xy/2$ and applies the spherical cutting unit TO3b of the deburring tool TO3 to the first reversal position R1 of the periphery C1p.

Accordingly, the spherical cutting unit TO3b of the deburring tool TO3 separates from the periphery C1p and moves from the second reversal position R2 to the first reversal position R1.

Subsequently, according to equations (11) and (13) described above, the NC apparatus 70 determines the angle $\theta yz$ corresponding to the cutting position P1 on the second path PA2 based on the feed rate F (S118). Furthermore, according to equations (1) to (10) described above, the NC apparatus 70 determines the Z-axis coordinate Zp and the C-axis angle Cp at the angle $\theta yz$ based on the value CD and the value OD (S120). According to processing up to S120, the Z-axis coordinate Zp corresponding to the cutting position P1 that changes along the periphery C1p on the Z-axis and the C-axis angle Cp corresponding to the cutting position P1 on the C-axis are determined.

After determining the Z-axis coordinate Zp and the C-axis angle Cp, the NC apparatus 70 controls the relative positional relationship between the workpiece W1 and the deburring tool TO3 to the Z-axis coordinate Zp and controls the workpiece W1 around the spindle axis AX1 to the C-axis angle Cp (S122). Subsequently, the NC apparatus 70 determines whether or not the cutting position P1 has reached the second reversal position R2 (S124). When the cutting position P1 has not reached the second reversal position R2, the NC apparatus 70 repeats the processing of S118 to S124. When the cutting position P1 has reached the second reversal position R2, the NC apparatus 70 ends the deburring processing.

As described above, the NC apparatus 70 controls the relative positional relationship between the spindle 11 and the tool post 30 in the Z-axis direction to the Z-axis coordinate Zp and controls rotation of the spindle 11 to the C-axis angle Cp so that the cutting position P1 changes along the periphery C1p of the cross hole C1. In addition, the NC apparatus 70 performs control for changing the cutting position P1 from the first reversal position R1 to the second reversal position R2 on the first path PA1, changing the cutting position P1 from the first reversal position R1 to the second reversal position R2 on the second path PA2, and cutting the periphery C1p so that the cut instructed by the deburring command CM1 is maintained.

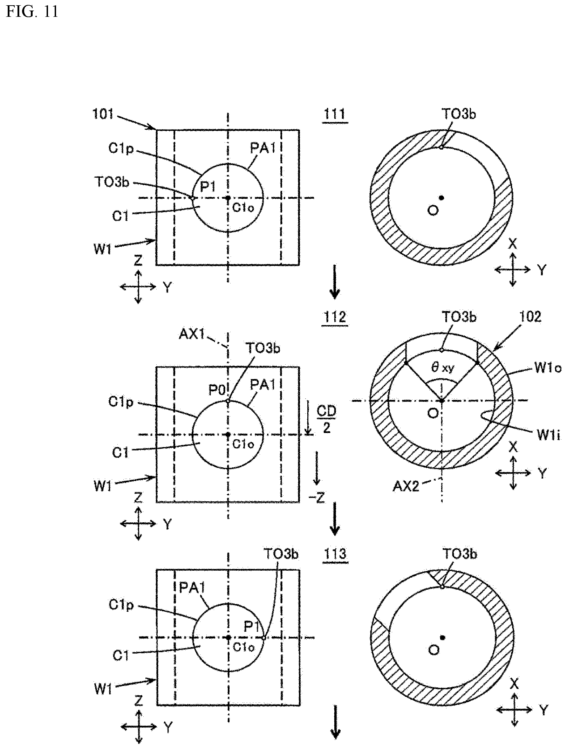

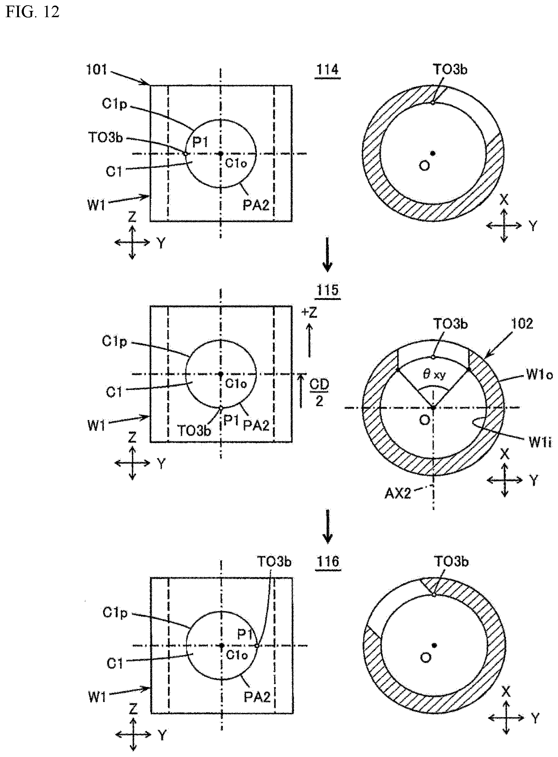

FIGS. 11 and 12 schematically show a Z-axis movement and a C-axis rotation of the workpiece W1 when up-cutting of the inner peripheral surface W1i is instructed by the deburring command CM1. Left sides of FIGS. 11 and 12 show the plan view 101 of the workpiece W1 in states 111 to 116 and right sides of FIGS. 11 and 12 show the transverse sectional view 102 of the workpiece W1 in the states 111 to 116. As a prerequisite, let us assume that the deburring tool TO3 is a right-handed ball endmill and the deburring tool TO3 rotates clockwise around the deburring tool center axis AX3.

In the state 111 where the cutting position P1 is at the first reversal position R1 where $\theta yz$ = - 90°, the Z-axis coordinate Zp is 0 and the C-axis angle Cp is -$\theta xy/2$. Subsequently, when the cutting position P1 moves clockwise along the first path PA1 on the plan view 101, since the Z-axis coordinate Zp increases, the workpiece W1 moves in the -Z direction and the C-axis angle Cp increases toward 0°.

In the state 112 where the cutting position P1 is $\theta yz$ = 0°, since the Z-axis coordinate Zp becomes +CD/2, the workpiece W1 is at a position after moving by a distance CD/2 in the -Z direction and the C-axis angle Cp becomes 0°. Subsequently, since the Z-axis coordinate Zp decreases, the workpiece W1 moves in the +Z direction and the C-axis angle Cp increases toward +$\theta xy/2$.

In the state 113 where the cutting position P1 is at the second reversal position R2 where $\theta yz$ = 90°, the Z-axis coordinate Zp becomes 0 and the C-axis angle Cp becomes +$\theta xy/2$. At this point, the cutting position P1 is returned to the first reversal position R1. Accordingly, the spherical cutting unit TO3b of the deburring tool TO3 separates from the periphery C1p and moves from the second reversal position R2 to the first reversal position R1. As shown in FIG. 12, in the state 114 where the cutting position P1 is at the first reversal position R1 where $\theta yz$ = 270°, the Z-axis coordinate Zp becomes 0 and the C-axis angle Cp becomes - $\theta xy/2$. Subsequently, when the cutting position P1 moves counterclockwise along the second path PA2 on the plan view 101, since the Z-axis coordinate Zp decreases, the workpiece W1 moves in the +Z direction and the C-axis angle Cp decreases toward 0°.

In the state 115 where the cutting position P1 is $\theta yz$ = 180°, since the Z-axis coordinate Zp becomes -CD/2, the workpiece W1 is at a position after moving by a distance CD/2 in the +Z direction and the C-axis angle Cp becomes 0°. Subsequently, since the Z-axis coordinate Zp increases, the workpiece W1 moves in the -Z direction and the C-axis angle Cp increases toward +$\theta xy/2$.

In the state 116 where the cutting position P1 is at the second reversal position R2 where $\theta yz$ = 90°, the Z-axis coordinate Zp becomes 0 and the C-axis angle Cp becomes +$\theta xy/2$.

Accordingly, the ridge of the periphery C1p of the cross hole C1 is cut all the way around and burrs on the outer peripheral surface W1o and the inner peripheral surface W1i are removed.

Although not illustrated, even when down-cutting of the outer peripheral surface W1o is instructed by the deburring command CM1, down-cutting is maintained by the movement of the cutting position P1 as shown in FIGS. 11 and 12. When up-cutting of the outer peripheral surface W1o or down-cutting of the inner peripheral surface W1i is instructed by the deburring command CM1, the cutting position P1 changes from the state 113 to the state 111 via the state 112 and subsequently from the state 116 to the state 114 via the state 115. As a result, up-cutting of the outer peripheral surface W1o or down-cutting of the inner peripheral surface W1i is maintained.

Due to the deburring processing described above, burrs produced on the periphery C1p of the cross hole C1 are removed based on the value CD representing the diameter of the cross hole C1 viewed from the machining center axis direction and the value OD representing the outer diameter or the inner diameter of the workpiece W1 viewed from the spindle axis direction. The NC apparatus 70 need only control the two axes of the Z-axis along the spindle axis AX1 and the C-axis around the spindle axis AX1 instead of controlling the three axes of the X-axis, the Y-axis, and the Z-axis. Since the relative Z-axis coordinate Zp of the deburring tool TO3 with respect to the workpiece W1 is controlled in correspondence with the cutting position P1 while the C-axis angle Cp of the workpiece W1 is controlled in correspondence with the cutting position P1, interference between the deburring tool TO3 and the workpiece W1 is easily avoided. Therefore, interference between the deburring tool TO3 and the workpiece W1 due to command errors and the like when commanding the deburring tool TO3 to move in directions of three straight axes with respect to the workpiece W1 can be easily avoided.

In addition, due to the cutting position P1 moving from the second reversal position R2 to the first reversal position R1 midway through cutting, down-cutting or up-cutting instructed by the deburring command CM1 is maintained. In particular, when the orientation of the deburring tool TO3 is along the spindle axis AX1, the relative movement direction D2 of the deburring tool TO3 is to be reversed midway through cutting when the cutting position P1 makes one clockwise turn or one counterclockwise turn along the periphery C1p. Even in this case, the operator can cause the lathe 1 to execute down-cutting or up-cutting over the entire periphery C1p simply by having the deburring command CM1 instruct R = 0 or R = 1 and need not create a complex machining program PR2. Therefore, even if there are constraints on the orientation of rotation of the deburring tool TO3, the lathe 1 according to the present specific example can perform deburring while maintaining down-cutting or up-cutting without being conscious of the constraints and is convenient.

(4) Second specific example of deburring processing:

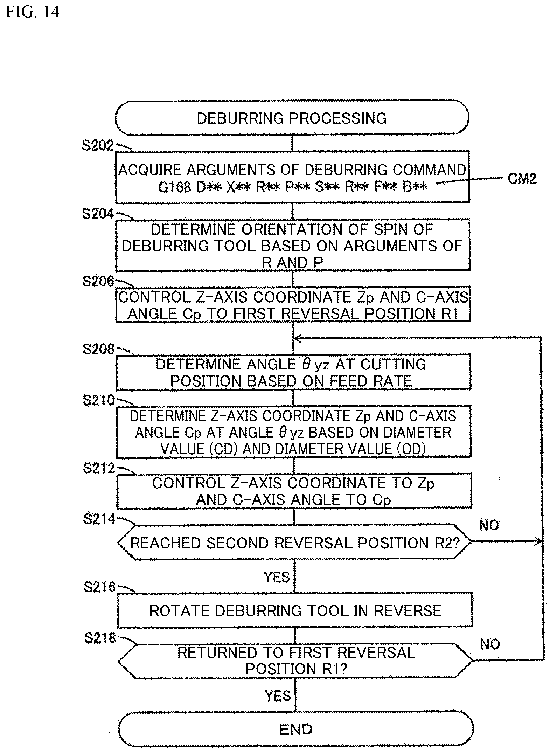

When a rotary tool that can be used both right-handed and left-handed such as a grindstone or brush is used as the deburring tool TO3, down-cutting or up-cutting can be maintained without having to move the cutting position P1 from the second reversal position R2 to the first reversal position R1 midway through cutting. The machining program PR2 may be prepared with the deburring command CM2 (refer to FIG. 14) suitable for rotary tools that can be used both right-handed and left-handed. Let us assume that the tool post 30 is capable of rotating the deburring tool TO3 both clockwise and counterclockwise.

FIG. 13A schematically shows an example of changing an orientation of rotation of the deburring tool TO3 when performing down-cutting of the outer peripheral surface W1o or up-cutting of the inner peripheral surface W1i. As a prerequisite, let us assume that the cutting position P1 makes one clockwise turn along the periphery C1p of the cross hole C1. In the second specific example, the cutting path PA0 along the periphery C1p includes the first path PA1 from the first reversal position R1 where $\theta yz = -90°$ to the second reversal position R2 where $\theta yz = 90°$ and the second path PA2 from the second reversal position R2 where $\theta yz = 90°$ to the first reversal position R1 where $\theta yz = 270°$. The first path PA1 is a path on which the relative movement direction D2 of the deburring tool TO3 with respect to the cutting direction D1 that is a direction of rotation of the spherical cutting unit TO3b does not become the second orientation D22 but becomes the first orientation D21. The second path PA2 is a path on which the relative movement direction D2 with respect to the cutting direction D1 does not become the first orientation D21 but becomes the second orientation D22. Therefore, the second path PA2 shown in FIG. 13A differs from the second path PA2 shown in FIG. 8A in the movement direction of the cutting position P1.

The NC apparatus 70 rotates the deburring tool TO3 clockwise on the first path PA1 and rotates the deburring tool TO3 counterclockwise on the second path PA2. When the cutting position P1 changes along the first path PA1, the relative movement direction D2 of the spherical cutting unit TO3b that rotates clockwise changes to the +Y direction. This means that down-cutting is performed when cutting the outer peripheral surface W1o where the cutting direction D1 (refer to FIG. 20) is opposite to the relative movement direction D2, and up-cutting is performed when cutting the inner peripheral surface W1i where the cutting direction D1 is the same as the relative movement direction D2. Once the cutting position P1 reaches the second reversal position R2, the NC apparatus 70 performs control of switching a spin direction of the deburring tool TO3 from clockwise to counterclockwise. Subsequently, when the cutting position P1 changes along the second path PA2, the relative movement direction D2 of the spherical cutting unit TO3b that rotates counterclockwise changes to the - Y direction. This means that down-cutting is performed when cutting the outer peripheral surface W1o where the cutting direction D1 is opposite to the relative movement direction D2, and up-cutting is performed when cutting the inner peripheral surface W1i where the cutting direction D1 is the same as the relative movement direction D2.

FIG. 13B schematically shows an example of changing an orientation of rotation of the deburring tool TO3 when performing up-cutting of the outer peripheral surface W1o or down-cutting of the inner peripheral surface W1i. Again, as a prerequisite, let us assume that the cutting position P1 makes one clockwise turn along the periphery C1p.

The cutting path PA0 shown in FIG. 13B also includes the first path PA1 and the second path PA2 similar to those shown in FIG. 13A. The first path PA1 shown in FIG. 13B differs from the first path PA1 shown in FIG. 8B in the movement direction of the cutting position P1.

The NC apparatus 70 rotates the deburring tool TO3 counterclockwise on the first path PA1 and rotates the deburring tool TO3 clockwise on the second path PA2. When the cutting position P1 changes along the first path PA1, the relative movement direction D2 of the spherical cutting unit TO3b that rotates counterclockwise changes to the +Y direction. This means that up-cutting is performed when cutting the outer peripheral surface W1o where the cutting direction D1 (refer to FIG. 20) is the same as the relative movement direction D2, and down-cutting is performed when cutting the inner peripheral surface W1i where the cutting direction D1 is opposite to the relative movement direction D2. Once the cutting position P1 reaches the second reversal position R2, the NC apparatus 70 performs control of switching the spin direction of the deburring tool TO3 from counterclockwise to clockwise. Subsequently, when the cutting position P1 changes along the second path PA2, the relative movement direction D2 of the spherical cutting unit TO3b that rotates clockwise changes to the -Y direction. This means that up-cutting is performed when cutting the outer peripheral surface W1o where the cutting direction D1 is the same as the relative movement direction D2, and down-cutting is performed when cutting the inner peripheral surface W1i where the cutting direction D1 is opposite to the relative movement direction D2.

FIG. 14 schematically shows deburring processing that switches the spin direction of the deburring tool TO3. FIG. 14 also shows the deburring command CM2 included in the machining program PR2. The NC apparatus 70 shown in FIG. 2 starts the deburring processing upon reading the deburring command CM2 from the machining program PR2. As a prerequisite, let us assume that the cutting position P1 makes one clockwise turn along the periphery C1p of the cross hole C1 and the number of revolutions of the spindle 11 has been instructed in advance.

The deburring command CM2 shown in FIG. 14 has the format "G168 D** X** R** P** S** R** F** B**". "G168" indicates a deburring command for switching spin directions of the deburring tool TO3 midway through cutting. The argument "**" after D indicates the value OD (mm) of the outer diameter or the inner diameter of the workpiece W1. The argument "**" after X indicates the value CD (mm) of the diameter corresponding to the periphery C1p when viewing the cross hole C1 from the X-axis direction. The argument "**" after R indicating the third argument indicates which of down-cutting and up-cutting is to be performed, in which case "0" means down-cutting and "1" means up-cutting. The argument "**" after P indicates which of inner diameter machining in which the periphery C1p is cut on the inner peripheral surface W1i and outer diameter machining in which the periphery C1p is cut on the outer peripheral surface W1o is to be performed, in which case "0" means inner diameter machining and "1" means outer diameter machining. The argument "**" after S indicates a rotation speed (rpm) when the deburring tool TO3 spins clockwise. The argument "**" after R indicating the sixth argument indicates a rotation speed (rpm) when the deburring tool TO3 spins counterclockwise. If the rotation speed of the deburring tool TO3 when it spins is determined in advance, the argument indicating the rotation speed of the deburring tool TO3 may be omitted. The argument "**" after F indicates, when the deburring tool TO3 spins clockwise, a feed rate per minute which is distributed between the speed of movement of the workpiece W1 along the Z-axis and the rotation speed of the workpiece W1 on the C-axis. The argument "**" after B indicates, when the deburring tool TO3 spins counterclockwise, a feed rate per minute which is distributed between the speed of movement of the workpiece W1 along the Z-axis and the rotation speed of the workpiece W1 on the C-axis.

When the deburring processing shown in FIG. 14 starts, the NC apparatus 70 acquires the arguments of the deburring command CM2 (S202), and determines an orientation of spin of the deburring tool TO3 based on the arguments of R (third argument) and P (S204). When P = 1 (outer diameter machining) and R = 0 (down-cutting) or P = 0 (inner diameter machining) and R = 1 (up-cutting), the NC apparatus 70 determines the orientation of spin of the deburring tool TO3 to be clockwise on the first path PA1 and counterclockwise on the second path PA2 as shown in FIG. 13A. When P = 1 (outer diameter machining) and R = 1 (up-cutting) or P = 0 (inner diameter machining) and R = 0 (down-cutting), the NC apparatus 70 determines the orientation of spin of the deburring tool TO3 to be counterclockwise on the first path PA1 and clockwise on the second path PA2 as shown in FIG. 13B.

After determining the orientation of spin of the deburring tool TO3, the NC apparatus 70 controls the Z-axis coordinate Zp and the C-axis angle Cp to the first reversal position R1 (S206). For example, the NC apparatus 70 performs control so as to rotate the deburring tool TO3 at the instructed rotation speed S or R (sixth argument), associates the coordinate of the workpiece W1 on the Z-axis to Zp = 0, controls the C-axis angle of the workpiece W1 to - θxy/2, and applies the spherical cutting unit TO3b of the deburring tool TO3 to the first reversal position R1 of the periphery C1p.

Subsequently, according to equations (11) and (12) described above, the NC apparatus 70 determines the angle θyz corresponding to the cutting position P1 based on the feed rate F or B (S208). Note that when the argument of B is applied to the feed rate, the argument of B is to be applied to the feed rate F in equation (11) above. Furthermore, according to equations (1) to (10) described above, the NC apparatus 70 determines the Z-axis coordinate Zp and the C-axis angle Cp at the angle θyz based on the value CD and the value OD (S210).

After determining the Z-axis coordinate Zp and the C-axis angle Cp, the NC apparatus 70 controls the relative positional relationship between the workpiece W1 and the deburring tool TO3 to the Z-axis coordinate Zp and controls the workpiece W1 around the spindle axis AX1 to the C-axis angle Cp (S212). Subsequently, the NC apparatus 70 determines whether or not the cutting position P1 has reached the second reversal position R2 (S214). When the cutting position P1 has not reached the second reversal position R2, the NC apparatus 70 repeats the processing of S208 to S214. When processing of S216 and thereafter has not been performed, down-cutting or up-cutting instructed on the first path PA1 is performed on the periphery C1p. When the cutting position P1 has reached the second reversal position R2, the NC apparatus 70 rotates the deburring tool TO3 in reverse at the instructed rotation speed R (sixth argument) or S (S216). In S216, the NC apparatus 70 may perform control to slightly separate the rotating spherical cutting unit TO3b from the periphery C1p at the second reversal position R2, rotate the deburring tool TO3 in reverse at the rotation speed R (sixth argument) or S, and then apply the spherical cutting unit TO3b to the second reversal position R2 of the periphery C1p. Due to the separation of the spherical cutting unit TO3b from the periphery C1p in the hollow part W1h of the workpiece W1, the time required for a temporary interruption of the cutting of the periphery C1p at the second reversal position R2 may be shortened. A distance by which the spherical cutting unit TO3b is separated from the periphery C1p may be as little as 1 mm or less as long as the spherical cutting unit TO3b does not come into contact with the periphery C1p.

Subsequently, the NC apparatus 70 determines whether or not the cutting position P1 has returned to the first reversal position R1 (S218). When the cutting position P1 has not reached the first reversal position R1, the NC apparatus 70 repeats the processing of S208 to S218. After the determination processing of S218, down-cutting or up-cutting instructed on the second path PA2 is performed on the periphery C1p. When the cutting position P1 has reached the first reversal position R1, the NC apparatus 70 ends the deburring processing.

As described above, when down-cutting of the outer peripheral surface W1o or up-cutting of the inner peripheral surface W1i is instructed by the deburring command CM2, the deburring tool TO3 spins clockwise on the first path PA1 and the deburring tool TO3 spins counterclockwise on the second path PA2. Accordingly, the cutting position P1 makes one clockwise turn along the periphery C1p and down-cutting or up-cutting instructed by the deburring command CM2 is maintained. When up-cutting of the outer peripheral surface W1o or down-cutting of the inner peripheral surface W1i is instructed by the deburring command CM2, the deburring tool TO3 spins counterclockwise on the first path PA1 and the deburring tool TO3 spins clockwise on the second path PA2. Accordingly, the cutting position P1 makes one clockwise turn along the periphery C1p and down-cutting or up-cutting instructed by the deburring command CM2 is maintained. In addition, the ridge of the periphery C1p of the cross hole C1 is cut all the way around and burrs on the outer peripheral surface W1o and the inner peripheral surface W1i are removed. Since down-cutting or up-cutting is maintained without having to change an orientation of changing the cutting position P1 along the periphery C1p, the present specific example can perform deburring while maintaining down-cutting or up-cutting in an efficient manner.

Note that even when the cutting position P1 makes one counterclockwise turn along the periphery C1p, deburring while maintaining down-cutting or up-cutting can be performed by reversing the orientation of spin of the deburring tool TO3 midway through cutting.

(5) Third specific example of deburring processing:

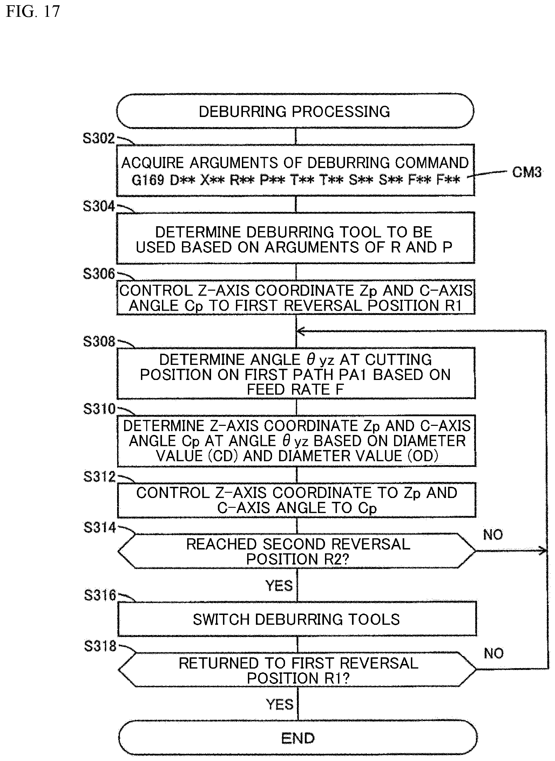

Even with the deburring tool TO3 that is constrained in the orientation of spin such as a ball endmill, deburring while maintaining down-cutting or up-cutting is conceivably performed by using a right-handed deburring tool TO3 and a left-handed deburring tool TO3. The machining program PR2 may be prepared with the deburring command CM3 (refer to FIG. 17) suitable for using both the right-handed deburring tool TO3 and the left-handed deburring tool TO3.

FIG. 15 schematically shows the tool post 30 (for example, the back machining tool post 34) to which the right-handed rotary tool TO31 and the left-handed rotary tool TO32 have been attached as deburring tools TO3.

As shown in FIG. 15, the right-handed rotary tool TO31 and the left-handed rotary tool TO32 are attached to the tool post 30. The tool post 30 rotates the right-handed rotary tool TO31 clockwise around the right-handed rotary tool center axis AX31 as the deburring tool center axis AX3 and rotates the left-handed rotary tool TO32 counterclockwise around the left-handed rotary tool center axis AX32 as the deburring tool center axis AX3.

FIG. 16A schematically shows an example of switching deburring tools TO3 when performing down-cutting of the outer peripheral surface W1o or up-cutting of the inner peripheral surface W1i. As a prerequisite, let us assume that the cutting position P1 makes one clockwise turn along the periphery C1p of the cross hole C1.

The cutting path PA0 shown in FIG. 16A is the same as the cutting path PA0 shown in FIG. 13A. The NC apparatus 70 performs control to cut the periphery C1p by rotating the right-handed rotary tool TO31 clockwise on the first path PA1 and cut the periphery C1p by rotating the left-handed rotary tool TO32 counterclockwise on the second path PA2. When the cutting position P1 changes along the first path PA1, the relative movement direction D2 of the right-handed rotary tool TO31 that rotates clockwise changes to the +Y direction. This means that down-cutting is performed when cutting the outer peripheral surface W1o where the cutting direction D1 (refer to FIG. 20) is opposite to the relative movement direction D2, and up-cutting is performed when cutting the inner peripheral surface W1i where the cutting direction D1 is the same as the relative movement direction D2. Once the cutting position P1 reaches the second reversal position R2, the NC apparatus 70 performs control of switching the deburring tools TO3 from the right-handed rotary tool TO31 to the left-handed rotary tool TO32. Subsequently, when the cutting position P1 changes along the second path PA2, the relative movement direction D2 of the left-handed rotary tool TO32 that rotates counterclockwise changes to the -Y direction. This means that down-cutting is performed when cutting the outer peripheral surface W1o where the cutting direction D1 is opposite to the relative movement direction D2, and up-cutting is performed when cutting the inner peripheral surface W1i where the cutting direction D1 is the same as the relative movement direction D2.

FIG. 16B schematically shows an example of switching the deburring tools TO3 when performing up-cutting of the outer peripheral surface W1o or down-cutting of the inner peripheral surface W1i. Again, as a prerequisite, let us assume that the cutting position P1 makes one clockwise turn along the periphery C1p.

The cutting path PA0 shown in FIG. 16B also includes the first path PA1 and the second path PA2 similar to those shown in FIG. 16A. The NC apparatus 70 performs control to cut the periphery C1p by rotating the left-handed rotary tool TO32 counterclockwise on the first path PA1 and cut the periphery C1p by rotating the right-handed rotary tool TO31 clockwise on the second path PA2. When the cutting position P1 changes along the first path PA1, the relative movement direction D2 of the left-handed rotary tool TO32 that rotates counterclockwise changes to the +Y direction. This means that up-cutting is performed when cutting the outer peripheral surface W1o where the cutting direction D1 (refer to FIG. 20) is the same as the relative movement direction D2, and down-cutting is performed when cutting the inner peripheral surface W1i where the cutting direction D1 is opposite to the relative movement direction D2. Once the cutting position P1 reaches the second reversal position R2, the NC apparatus 70 performs control of switching the deburring tools TO3 from the left-handed rotary tool TO32 to the right-handed rotary tool TO31. Subsequently, when the cutting position P1 changes along the second path PA2, the relative movement direction D2 of the right-handed rotary tool TO31 that rotates clockwise changes to the -Y direction. This means that up-cutting is performed when cutting the outer peripheral surface W1o where the cutting direction D1 is the same as the relative movement direction D2, and down-cutting is performed when cutting the inner peripheral surface W1i where the cutting direction D1 is opposite to the relative movement direction D2.

FIG. 17 schematically shows an example of deburring processing that switches deburring tools TO3 to be used. FIG. 17 also shows the deburring command CM3 included in the machining program PR2. The NC apparatus 70 shown in FIG. 2 starts the deburring processing upon reading the deburring command CM3 from the machining program PR2. As a prerequisite, let us assume that the cutting position P1 makes one clockwise turn along the periphery C1p of the cross hole C1 and the number of revolutions of the spindle 11 has been instructed in advance.

The deburring command CM3 shown in FIG. 17 has the format "G169 D** X** R** P** T** T** S** S** F** F**". "G169" indicates a deburring command for switching the deburring tools TO3 midway through cutting. The argument "**" after D indicates the value OD (mm) of the outer diameter or the inner diameter of the workpiece W1. The argument "**" after X indicates the value CD (mm) of the diameter corresponding to the periphery C1p when viewing the cross hole C1 from the X-axis direction. The argument "**" after R indicates which of down-cutting and up-cutting is to be performed, in which case "0" means down-cutting and "1" means up-cutting. The argument "**" after P indicates which of inner diameter machining in which the periphery C1p is cut on the inner peripheral surface W1i and outer diameter machining in which the periphery C1p is cut on the outer peripheral surface W1o is to be performed, in which case "0" means inner diameter machining and "1" means outer diameter machining. The argument "**" after T indicating the fifth argument indicates the number of the right-handed rotary tool TO31. For example, when a rotary tool T2100 is to be used as the right-handed rotary tool TO31, the description "T2100" is used. The argument "**" after T indicating the sixth argument indicates the number of the left-handed rotary tool TO32. For example, when a rotary tool T2200 is to be used as the left-handed rotary tool TO32, the description "T2200" is used. The argument "**" after S indicating the seventh argument indicates a rotation speed (rpm) when the right-handed rotary tool TO31 spins clockwise. The argument "**" after S indicating the eighth argument indicates a rotation speed (rpm) when the left-handed rotary tool TO32 spins counterclockwise. The argument "**" after F indicating the ninth argument indicates, when the right-handed rotary tool TO31 is used, a feed rate per minute which is distributed between the speed of movement of the workpiece W1 along the Z-axis and the rotation speed of the workpiece W1 on the C-axis. The argument "**" after F indicating the tenth argument indicates, when the left-handed rotary tool TO32 is used, a feed rate per minute which is distributed between the speed of movement of the workpiece W1 along the Z-axis and the rotation speed of the workpiece W1 on the C-axis.

When the deburring processing shown in FIG. 17 starts, the NC apparatus 70 acquires the arguments of the deburring command CM3 (S302), and determines the deburring tool TO3 to be used based on the arguments of R and P (S304). When P = 1 (outer diameter machining) and R = 0 (down-cutting) or P = 0 (inner diameter machining) and R = 1 (up-cutting), the NC apparatus 70 determines the deburring tool TO3 to be used to be the right-handed rotary tool TO31 on the first path PA1 and the left-handed rotary tool TO32 on the second path PA2 as shown in FIG. 16A. When P = 1 (outer diameter machining) and R = 1 (up-cutting) or P = 0 (inner diameter machining) and R = 0 (down-cutting), the NC apparatus 70 determines the deburring tool TO3 to be used to be the left-handed rotary tool TO32 on the first path PA1 and the right-handed rotary tool TO31 on the second path PA2 as shown in FIG. 16B.

After determining the deburring tool TO3 to be used, the NC apparatus 70 controls the Z-axis coordinate Zp and the C-axis angle Cp to the first reversal position R1 for the determined rotary tool (TO31 or TO32) (S306). For example, the NC apparatus 70 performs control so as to rotate the rotary tool (TO31 or TO32) at the rotation speed S (seventh argument or eighth argument), associates the coordinate of the workpiece W1 on the Z-axis to Zp = 0, controls the C-axis angle of the workpiece W1 to $-\theta xy/2$, and applies the spherical cutting unit TO3b of the rotary tool (TO31 or TO32) to the first reversal position R1 of the periphery C1p.

Subsequently, according to equations (11) and (12) described above, the NC apparatus 70 determines the angle $\theta yz$ corresponding to the cutting position P1 based on the feed rate F or B (S308). Furthermore, according to equations (1) to (10) described above, the NC apparatus 70 determines the Z-axis coordinate Zp and the C-axis angle Cp at the angle $\theta yz$ based on the value CD and the value OD (S310).

After determining the Z-axis coordinate Zp and the C-axis angle Cp, the NC apparatus 70 controls the relative positional relationship between the workpiece W1 and the rotary tool (TO31 or TO32) to the Z-axis coordinate Zp and controls the workpiece W1 around the spindle axis AX1 to the C-axis angle Cp (S312). Subsequently, the NC apparatus 70 determines whether or not the cutting position P1 has reached the second reversal position R2 (S314). When the cutting position P1 has not reached the second reversal position R2, the NC apparatus 70 repeats the processing of S308 to S314. When processing of S316 and thereafter has not been performed, down-cutting or up-cutting instructed on the first path PA1 is performed on the periphery C1p. Once the cutting position P1 reaches the second reversal position R2, the NC apparatus 70 performs control of switching the deburring tool TO3 to be used (S316). When the right-handed rotary tool TO31 is used on the first path PA1, the deburring tool TO3 to be used is switched to the left-handed rotary tool TO32. When the left-handed rotary tool TO32 is used on the first path PA1, the deburring tool TO3 to be used is switched to the right-handed rotary tool TO31. In S316, the NC apparatus 70 performs control to separate the spherical cutting unit TO3b of the rotary tool (TO31 or TO32) being used from the periphery C1p, rotate the rotary tool (TO32 or TO31) not being used at the rotation speed S (seventh argument or eighth argument), and then apply the spherical cutting unit TO3b of the rotary tool (TO32 or TO31) not being used to the second reversal position R2 of the periphery C1p.

Subsequently, the NC apparatus 70 determines whether or not the cutting position P1 has returned to the first reversal position R1 (S318). When the cutting position P1 has not reached the first reversal position R1, the NC apparatus 70 repeats the processing of S308 to S318. After the determination processing of S318, down-cutting or up-cutting instructed on the second path PA2 is performed on the periphery C1p. When the cutting position P1 has reached the first reversal position R1, the NC apparatus 70 ends the deburring processing.

As described above, when down-cutting of the outer peripheral surface W1o or up-cutting of the inner peripheral surface W1i is instructed by the deburring command CM3, the right-handed rotary tool TO31 that spins clockwise is used on the first path PA1 and the left-handed rotary tool TO32 that spins counterclockwise is used on the second path PA2. Accordingly, the cutting position P1 makes one clockwise turn along the periphery C1p and down-cutting or up-cutting instructed by the deburring command CM3 is maintained. When up-cutting of the outer peripheral surface W1o or down-cutting of the inner peripheral surface W1i is instructed by the deburring command CM3, the left-handed rotary tool TO32 that spins counterclockwise is used on the first path PA1 and the right-handed rotary tool TO31 that spins clockwise is used on the second path PA2. Accordingly, the cutting position P1 makes one clockwise turn along the periphery C1p and down-cutting or up-cutting instructed by the deburring command CM3 is maintained. In addition, the ridge of the periphery C1p of the cross hole C1 is cut all the way around and burrs on the outer peripheral surface W1o and the inner peripheral surface W1i are removed.

As described above, the NC apparatus 70 performs control for cutting the periphery C1p on the first path PA1 with one rotary tool of the right-handed rotary tool TO31 and the left-handed rotary tool TO32 and cutting the periphery C1p on the second path PA2 with the other rotary tool so as to maintain the cut instructed by the deburring command CM3. Even in the present specific example, since down-cutting or up-cutting is maintained without having to change an orientation of changing the cutting position P1 along the periphery C1p, deburring while maintaining down-cutting or up-cutting can be performed.

Note that even when the cutting position P1 makes one counterclockwise turn along the periphery C1p, deburring while maintaining down-cutting or up-cutting can be performed by switching the deburring tool TO3 midway through cutting.

(6) Modifications:

Various modifications of the present invention are conceivable.

For example, the machine tool is not limited to a lathe and may be a machining center or the like.

The lathe 1 may be a spindle-fixed lathe of which the front spindle 16 does not move in the Z-axis direction.

At least a part of processing of S102 to S110, S114 to S120, and S124 shown in FIGS. 9 and 10 may be performed outside the lathe 1 such as by an external computer. At least a part of processing of S202 to S210 and S214 to S218 shown in FIG. 14 may be performed outside the lathe 1 and at least a part of processing of S302 to S310 and S314 to S318 shown in FIG. 17 may be performed outside the lathe 1.

The argument (OD) of D in the deburring commands CM1 to CM3 is not limited to a diameter value and may be a radius value or the like. The argument (CD) of X in the deburring commands CM1 to CM3 is not limited to a diameter value and may be a radius value or the like.

While deburring is performed by controlling the Z-axis coordinate Zp and the C-axis angle Cp in the specific examples described above, down-cutting or up-cutting instructed by a deburring command can be realized even when performing deburring by controlling a relative cutting position of a workpiece in the three directions of the X-axis, the Y-axis, and the Z-axis.

Even when the orientation of the deburring tool center axis AX3 is an orientation along the machining center axis AX2, the NC apparatus capable of executing controlling of cutting the periphery C1p so as to maintain down-cutting or up-cutting according to the deburring command can be executed. For example, let us assume that the deburring tool TO3 is a right-handed ball endmill and the deburring tool TO3 rotates clockwise around the deburring tool center axis AX3. When R = 0 (down-cutting) is instructed by the deburring command, the NC apparatus 70 can realize down-cutting all the way around the periphery C1p by causing the spherical cutting unit TO3b of the deburring tool TO3 to make one counterclockwise turn along the periphery C1p. When R = 1 (up-cutting) is instructed by the deburring command, the NC apparatus 70 can realize up-cutting all the way around the periphery C1p by causing the spherical cutting unit TO3b of the deburring tool TO3 to make one clockwise turn along the periphery C1p.

The machining center axis AX2 need not be perpendicular to the spindle axis AX1 as long as the machining center axis AX2 intersects with the spindle axis AX1. Even when the machining center axis AX2 intersects the spindle axis AX1 at an angle, down-cutting or up-cutting instructed by the deburring command can be realized.

The hole that is an object of deburring is not limited to the cross hole C1 and may be a bottomed hole that is recessed from the outer peripheral surface W1o to the middle of the workpiece W1 along the machining center axis AX2, a horizontal hole for a solid workpiece, and the like.

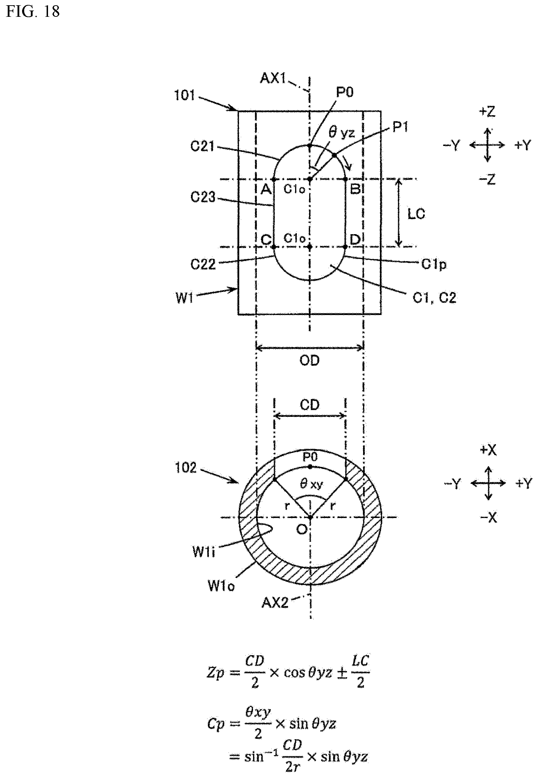

A hole viewed from the machining center axis direction such as the cross hole C1 need only be shaped so as to have a portion that can be called a diameter and may be a long hole C2 that includes a straight portion in addition to a portion with an arc shape as illustrated in FIG. 18.

FIG. 18 schematically shows an example of determining the Z-axis coordinate Zp and the C-axis angle Cp corresponding to the cutting position P1 based on a diameter value (CD) of the long hole C2, an inner diameter value (OD) of the workpiece W1, and a center-to-center distance value (LC) of arc parts. In FIG. 18, the plan view 101 of the workpiece W1 is shown in an upper part, the transverse sectional view 102 of the workpiece W1 is shown below the plan view 101, and calculation formulas of the Z-axis coordinate Zp and the C-axis angle Cp are shown in a lower part.

As shown in the plan view 101, the periphery C1p of the long hole C2 when viewed from the X-axis direction includes an arc-shaped first arc part C21 in a range of Zp > 0, an arc-shaped second arc part C22 in a range of Zp < 0, and a straight part C23 that connects the first arc part C21 to the second arc part C22.

The value CD represents a diameter corresponding to the periphery C1p when viewing the first arc part C21 and the second arc part C22 from the X-axis direction. The value OD represents a diameter corresponding to a circumference that passes through the periphery C1p around the spindle axis AX1 on a cross section (refer to transverse sectional view 102) which is perpendicular to the spindle axis AX1 between centers C1o or, in other words, the inner peripheral surface W1i. FIG. 18 also shows the point B corresponding to θyz = 90° in the first arc part C21, a point D corresponding to θyz = 90° in the second arc part C22, a point C corresponding to θyz = 270° in the second arc part C22, and the point A corresponding to θyz = -90° in the first arc part C21. FIG. 18 also shows the value LC representing a center-to-center distance meaning a distance between the center C1o corresponding to the first arc part C21 and the center C1o corresponding to the second arc part C22.

When the cutting position P1 is at the first arc part C21, the Z-axis coordinate Zp is represented by the following equation, using the diameter value CD corresponding to the periphery C1p, the angle θyz, and the value LC representing center-to-center distance.

$$Zp = (CD/2) \times \cos\theta yz + (LC/2) \cdots (14)$$

When the cutting position P1 is at the second arc part C22, the Z-axis coordinate Zp is represented by the following equation.

$$Zp = (CD/2) \times \cos\theta yz - (LC/2) \cdots (15)$$

When the cutting position P1 is at the first arc part C21 or the second arc part C22, a radius value CD/2 corresponding to the value CD is represented by the following equation, using the radius value r = OD/2 and the angle θxy.

$$CD/2 = r \times \sin(\theta xy/2) \cdots (16)$$

From the equation (16) above, the angle θxy is represented by the following equation.

$$\theta xy = 2 \times \arcsin(CD/2r) \cdots (17)$$

Since the C-axis angle Cp varies within a range expressed as -(θxy/2) ≤ Cp ≤ +(θxy/2), using the angle θxy and the angle θyz corresponding to the cutting position P1, the C-axis angle Cp is represented by the following equation.

$$Cp = (\theta xy/2) \times \sin\theta yz$$

$$= \arcsin(CD/2r) \times \sin\theta yz \cdots (18)$$

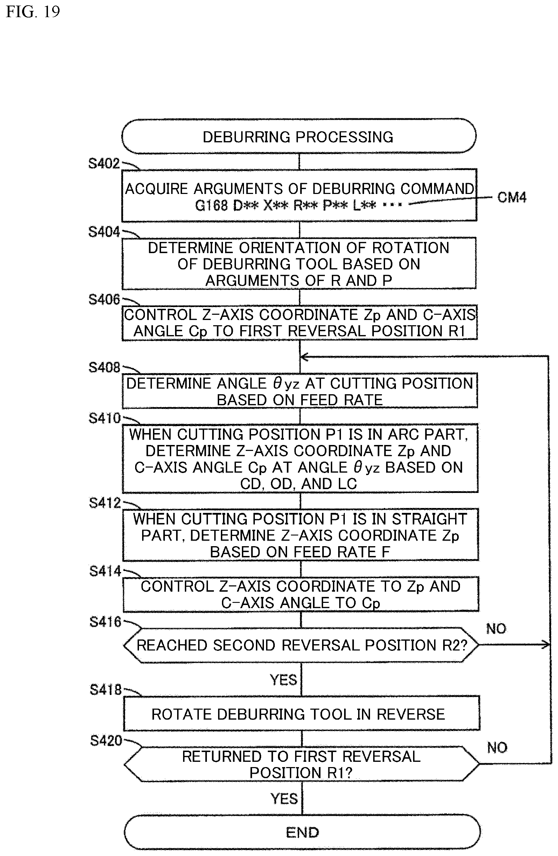

From the above, by determining the Z-axis coordinate Zp and the C-axis angle Cp with respect to each of the first arc part C21, the second arc part C22, and the straight part C23 based on the value CD, the value OD, and the value LC representing a center-to-center distance, the deburring processing can be controlled by 2-axis control of the Z-axis and the C-axis. By preparing the deburring command CM4 (refer to FIG. 19) suitable for deburring with 2-axis control, deburring can be performed without having to command the cutting position P1 in the three axes of the X-axis, the Y-axis, and the Z-axis.

Note that with respect to the straight part C23, cutting does not fit into either the concept of down-cutting or the concept of up-cutting regardless of the deburring tool TO3 spinning clockwise or counterclockwise. Therefore, the orientation of spin of the deburring tool TO3 may be switched in any portion of the straight part C23.

FIG. 19 schematically illustrates the deburring processing for cutting the periphery C1p of the long hole C2 using a case where the deburring tool TO3 is spinnable both clockwise and counterclockwise. FIG. 19 also shows the deburring command CM4 included in the machining program PR2. The NC apparatus 70 shown in FIG. 2 starts the deburring processing upon reading the deburring command CM4 from the machining program PR2.

"L**" has been added to the deburring command CM4 shown in FIG. 19. The argument "**" after L indicates the value LC (mm) representing the center-to-center distance of the arc parts (C21 and C22). Note that the deburring command CM1 shown in FIG. 9 and the deburring command CM3 shown in FIG. 17 can also perform deburring of the periphery C1p of the long hole C2 by adding "L**".

When the cutting position P1 is at the straight part C23, a rate of the cutting position P1 that moves in the Z-axis direction assumes, for example, the feed rate F or B. The time (denoted by Tc (min)) required by the cutting position P1 to move along the first arc part C21 or the second arc part C22 can be calculated by the following equation.

$$\text{Tc} = (\text{CD}^2 + \theta xy^2)^{1/2}/\text{F} \cdots (19)$$

Note that when the argument of B is applied to the feed rate, the argument of B is to be applied to the feed rate F in equation (19) above.

If tc (min) denotes the time the cutting position P1 was positioned on the arc parts (C21 and C22) after the start of movement from a position A where $\theta xy = -90°$ in an orientation in which the angle $\theta xy$ increases, the angle $\theta yz$ (deg) corresponding to the cutting position P1 can be calculated, for example, by the following formula.

$$\theta yz = 180 \times (tc/Tc) - 90 \cdots (20)$$

Therefore, the Z-axis coordinate Zp and the C-axis angle Cp when the cutting position P1 is on the arc parts (C21 and C22) can be determined by applying the angle $\theta yz$ corresponding to the cutting position P1 that changes along the periphery C1p to the above equations (14) to (18) together with the value CD, the value OD, and the value LC. When the cutting position P1 is at the straight part C23, the C-axis angle Cp is $+\theta xy/2$ or $-\theta xy/2$ and the Z-axis coordinate Zp changes according to the feed rate F or B.

When the deburring processing starts, the NC apparatus 70 acquires the arguments of the deburring command CM4 described above (S402), and determines an orientation of spin of the deburring tool TO3 based on the arguments of R (third argument) and P (S404). Next, the NC apparatus 70 controls the Z-axis coordinate Zp and the C-axis angle Cp to the first reversal position R1 (for example, position A or C) (S406). Subsequently, according to equations (19) and (20) described above, the NC apparatus 70 determines the angle $\theta yz$ corresponding to the cutting position P1 based on the feed rate F or B (S408). When the cutting position P1 is on the arc parts (C21 and C22), according to equations (14) to (18) described above, the NC apparatus 70 determines the Z-axis coordinate Zp and the C-axis angle Cp at the angle $\theta yz$ based on the value CD and the value OD (S410). When the cutting position P1 is at the straight part C23, the NC apparatus 70 determines the Z-axis coordinate Zp based on the feed rate F or B (S412).

After determining the Z-axis coordinate Zp and the C-axis angle Cp, the NC apparatus 70 controls the relative positional relationship between the workpiece W1 and the deburring tool TO3 to the Z-axis coordinate Zp and controls the workpiece W1 around the spindle axis AX1 to the C-axis angle Cp (S414). Subsequently, the NC apparatus 70 determines whether or not the cutting position P1 has reached the second reversal position R2 (for example, position D or B) (S416).

When the cutting position P1 has not reached the second reversal position R2, the NC apparatus 70 repeats the processing of S408 to S416. When the cutting position P1 has reached the second reversal position R2, the NC apparatus 70 rotates the deburring tool TO3 in reverse at the instructed rotation speed (S418).

Subsequently, the NC apparatus 70 determines whether or not the cutting position P1 has returned to the first reversal position R1 (S420). When the cutting position P1 has not reached the first reversal position R1, the NC apparatus 70 repeats the processing of S408 to S420. When the cutting position P1 has reached the first reversal position R1, the NC apparatus 70 ends the deburring processing.

As described above, the NC apparatus 70 controls the relative positional relationship between the spindle 11 and the tool post 30 in the Z-axis direction to the Z-axis coordinate Zp and controls rotation of the spindle 11 to the C-axis angle Cp so that the cutting position P1 changes along the periphery C1p of the long hole C2. Therefore, the example shown in FIGS. 18 and 19 can easily avoid interference between the deburring tool TO3 and the workpiece W1 during deburring of the periphery C1p of the long hole C2. In addition, the operator can cause the lathe 1 to execute down-cutting or up-cutting over the entire periphery C1p simply by having the deburring command CM1 instruct R = 0 or R = 1 and need not create a complex machining program PR2. Therefore, even if there are constraints on the orientation of rotation of the deburring tool TO3, deburring while maintaining down-cutting or up-cutting can be performed without being conscious of the constraints.

While the long hole C2 described above is a longitudinally-long hole of which a size along the Z-axis is greater than a size around the C-axis, the long hole may be a transversely-long hole of which a size around the C-axis is greater than a size along the Z-axis. When the long hole is a transversely-long hole, the NC apparatus 70 need only perform control to change the C-axis angle Cp without changing the Z-axis coordinate Zp in a portion of the periphery that is not the arc parts.

Furthermore, the diameter corresponding to the first arc part and the diameter corresponding to the second arc part may differ from each other. In this case, the NC apparatus 70 need only perform control to change the Z-axis coordinate Zp at a constant speed and change the C-axis angle Cp at a constant speed of rotation in a portion connecting the arc parts in the periphery.

(7) Conclusion:

As described above, the present invention can provide a configuration of a machine tool or the like that improves convenience when removing burrs by various aspects. Obviously, the basic operations and effects described above can be obtained even with aspects solely made up of the constituent features related to the independent claims.

In addition, a configuration in which each of the configurations disclosed in the above examples is mutually substituted or combined, a configuration in which known techniques and each of the configurations disclosed in the above examples are mutually substituted or combined, and the like can also be implemented. The present invention also includes such configurations.

**Claims**

1. A machine tool, comprising:

   a spindle which rotates together with a workpiece around a spindle axis;
   a tool post to which is attached a deburring tool that cuts a periphery of a hole in an orientation intersecting the spindle axis in the workpiece and which rotates the deburring tool around a deburring tool center axis; and
   a control unit which controls a relative positional relationship between the spindle and the tool post and which performs control to change a cutting position by the deburring tool along the periphery, wherein
   the control unit
   acquires a command for instructing the rotating deburring tool to either perform, on the periphery, down-cutting in which a cutting direction by the deburring tool is opposite to a relative movement direction of the deburring tool or to perform, on the periphery, up-cutting in which the cutting direction and the relative movement direction are the same, and
   performs, at the cutting position, control to cut the periphery so that the cut instructed by the command is maintained.

2. The machine tool according to claim 1, wherein

   the deburring tool is attached to the tool post in an orientation along the spindle axis,
   the tool post rotates the deburring tool around the deburring tool center axis along the spindle axis, and
   the control unit performs control to change, midway through cutting of the periphery, an orientation to change the cutting position along the periphery or an orientation of rotation of the deburring tool around the deburring tool center axis so as to maintain the cut instructed by the command.

3. The machine tool according to claim 2, wherein

   when the relative movement direction of the deburring tool with respect to the cutting direction is a first orientation, assuming that the cut instructed by the command is to be performed on the periphery,
   a cutting path along the periphery includes a first path and a second path that reach a second reversal position from a first reversal position without the relative movement direction becoming a second orientation opposite to the first orientation, and
   the control unit performs control for changing the cutting position from the first reversal position to the second reversal position on the first path and changing the cutting position from the first reversal position to the second reversal position on the second path.

4. The machine tool according to claim 2, wherein

   the tool post is capable of rotating the deburring tool both clockwise and counterclockwise,
   a cutting path along the periphery includes a first path that reaches a second reversal position from a first reversal position without the relative movement direction of the deburring tool with respect to the cutting direction becoming a second orientation opposite to a first orientation and a second path that reaches the first reversal position from the second reversal position without the relative movement direction becoming the first orientation, and
   the control unit controls an orientation of rotation of the deburring tool on the first path and the second path in opposite orientations so as to maintain the cut instructed by the command.

5. The machine tool according to claim 2, wherein

   a right-handed rotary tool as the deburring tool and a left-handed rotary tool as the deburring tool are attached to the tool post,
   the tool post rotates the right-handed rotary tool clockwise around a right-handed rotary tool center axis as the deburring tool center axis and rotates the left-handed rotary tool counterclockwise around a left-handed rotary tool center axis as the deburring tool center axis,
   a cutting path along the periphery includes a first path that reaches a second reversal position from a first reversal position without the relative movement direction of the deburring tool with respect to the cutting direction becoming a second orientation opposite to a first orientation and a second path that reaches the first reversal position from the second reversal position without the relative movement direction becoming the first orientation, and

the control unit performs control for cutting the periphery on the first path with one rotary tool of the right-handed rotary tool and the left-handed rotary tool and cutting the periphery on the second path with the other rotary tool so as to maintain the cut instructed by the command.

6.  The machine tool according to claim 1, wherein

the workpiece has a cylindrical shape,
the deburring tool is attached to the tool post in an orientation along the spindle axis,
the tool post rotates the deburring tool around the deburring tool center axis along the spindle axis,
the command includes an argument that instructs whether to cut the periphery on an inner peripheral surface of the workpiece or to cut the periphery on an outer peripheral surface of the workpiece, and
the control unit performs, based on the argument, control to cut the periphery so that the cut instructed by the command is maintained.

FIG. 1

FIG. 2

LATHE 1

NC APPARATUS 70

CLOCK CIRCUIT 74

CPU 71

ROM 72
CONTROL PROGRAM PR1

RAM 73
MACHINING PROGRAM PR2

I/F 75

OPERATING UNIT 80
INPUT UNIT 81 | DISPLAY UNIT 82

FRONT HEADSTOCK DRIVING UNIT 18 — 15

FRONT SPINDLE ROTATION DRIVING UNIT 16c — 16

GRIPPING ACTUATOR 17a

BACK HEADSTOCK DRIVING UNIT 23 — 20

BACK SPINDLE ROTATION DRIVING UNIT 21c — 21

GRIPPING ACTUATOR 22a

GANG-TYPE TOOL POST DRIVING UNIT 33 — 32

BACK MACHINING TOOL POST DRIVING UNIT 35 — 34

TOOL ROTATION DRIVING UNIT 30c — TO1

U1

FIG. 3A

FIG. 3B

FIG. 3C

FIG. 4A

FIG. 4B

FIG. 4C

FIG. 5A

FIG. 5B

FIG. 6

$$Zp = \frac{CD}{2} \times \cos\theta yz$$

$$\theta xy = 2 \times \sin^{-1}\frac{CD}{2r} \;,\; r = \frac{OD}{2}$$

$$Cp = \frac{\theta xy}{2} \times \sin\theta yz$$
$$= \sin^{-1}\frac{CD}{2r} \times \sin\theta yz$$

FIG. 7

$$Zp = \frac{CD}{2} \times \cos\theta yz$$

$$\theta xy = 2 \times \sin^{-1}\frac{CD}{2r} , r = \frac{OD}{2}$$

$$Cp = \frac{\theta xy}{2} \times \sin\theta yz$$
$$= \sin^{-1}\frac{CD}{2r} \times \sin\theta yz$$

FIG. 8A

DOWN-CUTTING OF OUTER PERIPHERAL SURFACE
or UP-CUTTING OF INNER PERIPHERAL SURFACE

R1 → P0 → R2 ⋯→ R1 → P2 → R2

FIG. 8B

UP-CUTTING OF OUTER PERIPHERAL SURFACE or
DOWN-CUTTING OF INNER PERIPHERAL SURFACE

R1 → P0 → R2 ─··─→ R1 → P2 → R2

FIG. 9

```
                    ┌─────────────────────────────────────┐
                    │      DEBURRING PROCESSING           │
                    └─────────────────────────────────────┘
                                      │
S102 ┌──────────────────────────────────────────────────────┐
     │ ACQUIRE ARGUMENTS OF DEBURRING COMMAND               │── CM1
     │          G167 D** X** R** P** F**                     │
     └──────────────────────────────────────────────────────┘
                                      │
S104 ┌──────────────────────────────────────────────────────┐
     │     DETERMINE MOVEMENT PATH OF CUTTING               │
     │   POSITION BASED ON ARGUMENTS OF R AND P             │
     └──────────────────────────────────────────────────────┘
                                      │
S106 ┌──────────────────────────────────────────────────────┐
     │ CONTROL Z-AXIS COORDINATE Zp AND C-AXIS             │
     │  ANGLE Cp TO FIRST REVERSAL POSITION R1             │
     └──────────────────────────────────────────────────────┘
                                      │
S108 ┌──────────────────────────────────────────────────────┐
     │ DETERMINE ANGLE θyz AT CUTTING POSITION             │
     │   ON FIRST PATH PA1 BASED ON FEED RATE F            │
     └──────────────────────────────────────────────────────┘
                                      │
S110 ┌──────────────────────────────────────────────────────┐
     │ DETERMINE Z-AXIS COORDINATE Zp AND C-AXIS           │
     │  ANGLE Cp AT ANGLE θyz BASED ON DIAMETER            │
     │   VALUE (CD) AND DIAMETER VALUE (OD)                │
     └──────────────────────────────────────────────────────┘
                                      │
S112 ┌──────────────────────────────────────────────────────┐
     │     CONTROL Z-AXIS COORDINATE TO Zp AND             │
     │          C-AXIS ANGLE TO Cp                         │
     └──────────────────────────────────────────────────────┘
                                      │
S114     ╱──────────────────────────────────────────────╲    NO
        ╱  REACHED SECOND REVERSAL POSITION R2?          ╲──────
        ╲                                                ╱
         ╲──────────────────────────────────────────────╱
                              │ YES
                            ┌───┐
                            │ 1 │
                            └───┘
```

FIG. 10

```
                          ┌───┐
                          │ 1 │
                          └─┬─┘
                            │
S116 ┌──────────────────────┴──────────────────────┐
     │CONTROL Z-AXIS COORDINATE Zp AND C-AXIS       │
     │ANGLE Cp TO FIRST REVERSAL POSITION R1        │
     └──────────────────────┬──────────────────────┘
                            │
S118 ┌──────────────────────┴──────────────────────┐
     │        DETERMINE ANGLE θyz AT CUTTING        │
     │  POSITION ON SECOND PATH PA2 BASED ON        │
     │               FEED RATE F                    │
     └──────────────────────┬──────────────────────┘
                            │
S120 ┌──────────────────────┴──────────────────────┐
     │DETERMINE Z-AXIS COORDINATE Zp AND C-AXIS     │
     │ANGLE Cp AT ANGLE θyz BASED ON DIAMETER       │
     │VALUE (CD) AND DIAMETER VALUE (OD)            │
     └──────────────────────┬──────────────────────┘
                            │
S122 ┌──────────────────────┴──────────────────────┐
     │     CONTROL Z-AXIS COORDINATE TO Zp AND      │
     │           C-AXIS ANGLE TO Cp                 │
     └──────────────────────┬──────────────────────┘
                            │
S124 ╱──────────────────────┴──────────────────────╲   NO
     ╲ REACHED SECOND REVERSAL POSITION R2?         ╱──────
      ╲────────────────────┬─────────────────────╱
                           │ YES
                    ┌──────┴──────┐
                    │     END     │
                    └─────────────┘
```

DETERMINE ANGLE $\theta$yz AT CUTTING POSITION ON SECOND PATH PA2 BASED ON FEED RATE F

DETERMINE Z-AXIS COORDINATE Zp AND C-AXIS ANGLE Cp AT ANGLE $\theta$yz BASED ON DIAMETER VALUE (CD) AND DIAMETER VALUE (OD)

FIG. 11

FIG. 12

FIG. 13A

DOWN-CUTTING OF OUTER PERIPHERAL SURFACE
or UP-CUTTING OF INNER PERIPHERAL SURFACE

R1 → P0 → R2 → P2 → R1

FIG. 13B

UP-CUTTING OF OUTER PERIPHERAL SURFACE or
DOWN-CUTTING OF INNER PERIPHERAL SURFACE

R1 → P0 → R2 → P2 → R1

FIG. 14

```
            ╭──────────────────────────────────╮
            │      DEBURRING PROCESSING        │
            ╰──────────────────────────────────╯
                            │
S202 ┌──────────────────────────────────────────┐
     │ ACQUIRE ARGUMENTS OF DEBURRING COMMAND │──── CM2
     │  G168 D** X** R** P** S** R** F** B**   │
     └──────────────────────────────────────────┘
                            │
S204 ┌──────────────────────────────────────────┐
     │   DETERMINE ORIENTATION OF SPIN OF       │
     │ DEBURRING TOOL BASED ON ARGUMENTS OF     │
     │                R AND P                   │
     └──────────────────────────────────────────┘
                            │
S206 ┌──────────────────────────────────────────┐
     │ CONTROL Z-AXIS COORDINATE Zp AND C-AXIS  │
     │ ANGLE Cp TO FIRST REVERSAL POSITION R1   │
     └──────────────────────────────────────────┘
                            │
S208 ┌──────────────────────────────────────────┐
     │    DETERMINE ANGLE θ yz AT CUTTING       │
     │     POSITION BASED ON FEED RATE          │
     └──────────────────────────────────────────┘
                            │
S210 ┌──────────────────────────────────────────┐
     │ DETERMINE Z-AXIS COORDINATE Zp AND C-AXIS│
     │ ANGLE Cp AT ANGLE θ yz BASED ON DIAMETER │
     │   VALUE (CD) AND DIAMETER VALUE (OD)      │
     └──────────────────────────────────────────┘
                            │
S212 ┌──────────────────────────────────────────┐
     │    CONTROL Z-AXIS COORDINATE TO Zp       │
     │       AND C-AXIS ANGLE TO Cp             │
     └──────────────────────────────────────────┘
                            │
S214   ◇ REACHED SECOND REVERSAL POSITION R2? ◇── NO
                            │ YES
S216 ┌──────────────────────────────────────────┐
     │     ROTATE DEBURRING TOOL IN REVERSE     │
     └──────────────────────────────────────────┘
                            │
S218   ◇ RETURNED TO FIRST REVERSAL ◇──── NO
       ◇      POSITION R1?         ◇
                            │ YES
            ╭──────────────────────────────────╮
            │              END                 │
            ╰──────────────────────────────────╯
```

FIG. 15

30, 34

TO3,
TO31

AX3,
AX31

TO3,
TO32

AX3,
AX32

FIG. 16A

DOWN-CUTTING OF OUTER PERIPHERAL SURFACE
or UP-CUTTING OF INNER PERIPHERAL SURFACE

R1 → P0 → R2 → P2 → R1

FIG. 16B

UP-CUTTING OF OUTER PERIPHERAL SURFACE or
DOWN-CUTTING OF INNER PERIPHERAL SURFACE

R1 → P0 → R2 → P2 → R1

FIG. 17

```
┌─────────────────────────────────────┐
│        DEBURRING PROCESSING          │
└─────────────────────────────────────┘
                   │
S302  ┌────────────────────────────────────────┐
      │ ACQUIRE ARGUMENTS OF DEBURRING COMMAND  │      CM3
      │ G169 D** X** R** P** T** T** S** S** F** F** │
      └────────────────────────────────────────┘
                   │
S304  ┌────────────────────────────────────────┐
      │      DETERMINE DEBURRING TOOL TO BE     │
      │    USED BASED ON ARGUMENTS OF R AND P   │
      └────────────────────────────────────────┘
                   │
S306  ┌────────────────────────────────────────┐
      │ CONTROL Z-AXIS COORDINATE Zp AND C-AXIS │
      │  ANGLE Cp TO FIRST REVERSAL POSITION R1 │
      └────────────────────────────────────────┘
                   │
                   ▼◄─────────────────────────┐
S308  ┌────────────────────────────────────────┐
      │      DETERMINE ANGLE θyz AT CUTTING     │
      │    POSITION ON FIRST PATH PA1 BASED ON  │
      │                FEED RATE F              │
      └────────────────────────────────────────┘
                   │
S310  ┌────────────────────────────────────────┐
      │ DETERMINE Z-AXIS COORDINATE Zp AND C-AXIS│
      │  ANGLE Cp AT ANGLE θyz BASED ON DIAMETER │
      │    VALUE (CD) AND DIAMETER VALUE (OD)   │
      └────────────────────────────────────────┘
                   │
S312  ┌────────────────────────────────────────┐
      │   CONTROL Z-AXIS COORDINATE TO Zp AND   │
      │          C-AXIS ANGLE TO Cp             │
      └────────────────────────────────────────┘
                   │
S314  ╱────────────────────────────────╲   NO
      ╲     REACHED SECOND REVERSAL     ╱────────┐
       ╲        POSITION R2?           ╱         │
        ╲─────────────────────────────╱          │
                   │ YES                          │
S316  ┌────────────────────────────────────────┐ │
      │          SWITCH DEBURRING TOOLS         │ │
      └────────────────────────────────────────┘ │
                   │                              │
S318  ╱────────────────────────────────╲   NO    │
      ╲     RETURNED TO FIRST REVERSAL  ╱─────────┘
       ╲        POSITION R1?           ╱
        ╲─────────────────────────────╱
                   │ YES
          ┌──────────────────┐
          │       END        │
          └──────────────────┘
```

FIG. 18

$$Zp = \frac{CD}{2} \times \cos\theta yz \pm \frac{LC}{2}$$

$$Cp = \frac{\theta xy}{2} \times \sin\theta yz$$
$$= \sin^{-1}\frac{CD}{2r} \times \sin\theta yz$$

FIG. 19

```
┌─────────────────────────────────────────────┐
│            DEBURRING PROCESSING               │
└─────────────────────────────────────────────┘
                      │
S402                  │
  ┌───────────────────────────────────────────┐      CM4
  │ ACQUIRE ARGUMENTS OF DEBURRING COMMAND     │────
  │       G168 D** X** R** P** L** ···         │
  └───────────────────────────────────────────┘
S404                  │
  ┌───────────────────────────────────────────┐
  │        DETERMINE ORIENTATION OF ROTATION    │
  │          OF DEBURRING TOOL BASED ON         │
  │           ARGUMENTS OF R AND P              │
  └───────────────────────────────────────────┘
S406                  │
  ┌───────────────────────────────────────────┐
  │ CONTROL Z-AXIS COORDINATE Zp AND C-AXIS    │
  │  ANGLE Cp TO FIRST REVERSAL POSITION R1    │
  └───────────────────────────────────────────┘
                      │
S408                  │◄──────────────────────────┐
  ┌───────────────────────────────────────────┐  │
  │ DETERMINE ANGLE θyz AT CUTTING POSITION    │  │
  │            BASED ON FEED RATE              │  │
  └───────────────────────────────────────────┘  │
S410                  │                            │
  ┌───────────────────────────────────────────┐  │
  │ WHEN CUTTING POSITION P1 IS IN ARC PART,   │  │
  │   DETERMINE Z-AXIS COORDINATE Zp AND       │  │
  │  C-AXIS ANGLE Cp AT ANGLE θyz BASED ON     │  │
  │            CD, OD, AND LC                   │  │
  └───────────────────────────────────────────┘  │
S412                  │                            │
  ┌───────────────────────────────────────────┐  │
  │ WHEN CUTTING POSITION P1 IS IN STRAIGHT    │  │
  │  PART, DETERMINE Z-AXIS COORDINATE Zp      │  │
  │           BASED ON FEED RATE F             │  │
  └───────────────────────────────────────────┘  │
S414                  │                            │
  ┌───────────────────────────────────────────┐  │
  │    CONTROL Z-AXIS COORDINATE TO Zp AND     │  │
  │            C-AXIS ANGLE TO Cp              │  │
  └───────────────────────────────────────────┘  │
S416                  │                      NO    │
  ⟨ REACHED SECOND REVERSAL POSITION R2? ⟩─────────┤
                      │                            │
                   YES│                            │
S418                  │                            │
  ┌───────────────────────────────────────────┐  │
  │      ROTATE DEBURRING TOOL IN REVERSE       │  │
  └───────────────────────────────────────────┘  │
S420                  │                      NO    │
  ⟨       RETURNED TO FIRST REVERSAL       ⟩───────┘
  ⟨           POSITION R1?                 ⟩
                   YES│
  ┌───────────────────────────────────────────┐
  │                   END                       │
  └───────────────────────────────────────────┘
```

FIG. 20

# EP 4 706 855 A1

Europäisches
Patentamt

European
Patent Office

Office européen
des brevets

## EUROPEAN SEARCH REPORT

**Application Number**

EP 25 19 7017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/178355 A1 (CITIZEN HOLDINGS CO LTD [JP]; CITIZEN MACHINERY MIYANO CO [JP]) 6 November 2014 (2014-11-06) | 1 | INV. B23C3/12 B23B51/10 |
| A | * the whole document * | 2,6 | B23C5/10 |
| | ----- | | |
| X | JP H03 3716 A (SHIMADZU CORP) 9 January 1991 (1991-01-09) | 1,2,6 | ADD. G05B19/18 |
| A | * the whole document * | 3-5 | B24B9/00 |
| | ----- | | |

**TECHNICAL FIELDS SEARCHED (IPC)**

B23C
G05B
B24D
B24B

The present search report has been drawn up for all claims

| Place of search | Date of completion of the search | Examiner |
|---|---|---|
| The Hague | 23 January 2026 | Rabolini, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 7017

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2026

| Patent document cited in search report | Publication date | Patent family member(s) | Publication date |
|---|---|---|---|
| WO 2014178355 A1 | 06-11-2014 | CN 105209221 A | 30-12-2015 |
| | | EP 2992997 A1 | 09-03-2016 |
| | | JP 6313287 B2 | 18-04-2018 |
| | | JP 6494830 B2 | 03-04-2019 |
| | | JP 2018134731 A | 30-08-2018 |
| | | JP WO2014178355 A1 | 23-02-2017 |
| | | KR 20160002740 A | 08-01-2016 |
| | | TW 201505801 A | 16-02-2015 |
| | | US 2016052070 A1 | 25-02-2016 |
| | | WO 2014178355 A1 | 06-11-2014 |
| JP H033716 A | 09-01-1991 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024154850 A

- WO 2014178355 A